# EUROPEAN PATENT APPLICATION

(11) **EP 4 679 244 A1**
(43) Date of publication of application: **14.01.2026**
(21) Application number: 24824920.3
(22) Date of filing: 01.03.2024
(51) Int. Cl.: G06F 3/04817, G06F 9/451

(54) **NOTIFICATION DISPLAY METHOD AND RELATED APPARATUS**

(30) Priority: 19.06.2023 CN 202310733087
(71) Applicant: Honor Device Co., Ltd., Shenzhen, Guangdong 518040 (CN)
(72) Inventor: DING, Yiyan, Shenzhen, Guangdong 518040 (CN); HUANG, Liwei, Shenzhen, Guangdong 518040 (CN); JIAO, Junting, Shenzhen, Guangdong 518040 (CN)
(74) Representative: Gill Jennings & Every LLP
(86) International application number: PCT/CN2024/079498
(87) International publication number: WO 2024/260017

(57) **Abstract**

This application provides a notification display method and an apparatus, applied to an electronic device. A first interface is currently displayed, where a status bar of the first interface includes a first capsule notification, and the first capsule notification includes status information of a first service. A second capsule notification is received, where the second capsule notification includes status information of a second service. When at least two capsule notifications exist, a capsule notification displayed on top is determined according to a preset on-top-display rule, where the preset on-top-display rule may include displaying a capsule notification corresponding to a service with a higher priority on top, and for services with a same priority, displaying a latest received capsule notification on top, where a priority of a service is associated with an end manner of the service. A service with a higher priority is an important service. Therefore, according to this solution, a user can always intuitively learn of an important service notification, thereby improving efficiency of the user learning of an important service notification.

## Description

This application claims priority to Chinese Patent Application No. 202310733087.2, filed with the China National Intellectual Property Administration on June 19, 2023 and entitled "NOTIFICATION DISPLAY METHOD AND RELATED APPARATUS", which is incorporated herein by reference in its entirety.

### TECHNICAL FIELD

This application relates to the field of electronic device technologies, and in particular, to a notification display method and a related apparatus.

### BACKGROUND

With rapid development of intelligent terminal technologies, the variety of applications (application, APP) and services has proliferated, leading to an increasing volume of notification messages associated with these APPs and services. Currently, there are many types of notification messages of APPs or services, which causes inefficiency of obtaining important notification information by a user.

### SUMMARY

In view of this, this application provides a notification display method and a related apparatus, to resolve at least some of the foregoing problems, and discloses the following technical solutions.

According to a first aspect, this application provides a notification display method, applied to an electronic device, where the method includes: displaying a first interface, where the first interface includes a status bar, the status bar includes a first capsule notification, and the first capsule notification includes status information of a first service; receiving a second capsule notification, where the second capsule notification includes status information of a second service; and when both the first service and the second service are to be ended manually or automatically, displaying the second capsule notification on top; when the first service is to be ended automatically and the second service is to be ended manually, displaying the second capsule notification on top; or when the first service is to be ended manually and the second service is to be ended automatically, displaying the first capsule notification on top again after displaying the second capsule notification on top for preset duration. It can be learned that, in this solution, when multiple capsule notifications exist, a priority of a service corresponding to each capsule notification is determined according to an end manner (for example, manual end or automatic end) of the service, and a capsule notification corresponding to a service with a higher priority is displayed on top. In this way, status information of a service with a higher priority may be clearly seen by a user, thereby improving efficiency of obtaining the service status information by the user.

In a possible implementation of the first aspect, the electronic device includes a control switch corresponding to each display scene corresponding to the first service, and the method further includes: if an on-off state of a control switch corresponding to each display scene of the first service is inconsistent with a display scene corresponding to a notification of the first service that is determined based on a preset display scene rule, displaying the notification of the first service according to the display scene determined based on the preset display scene rule, where the display scene includes at least one of a lock screen interface, a home screen card, a global status capsule, a global notification card, a notification center, and a leftmost home screen. It can be learned that a priority of the preset display scene rule is higher than that of the control switch corresponding to the display scene. That is, when there is a conflict between the two, the display scene determined by the preset display scene rule is used, so that the user can learn a service status of an important service in a timely manner.

In a possible implementation of the first aspect, the electronic device further includes an expand identifier below a capsule notification displayed on top, the first capsule notification is displayed on top, and the method further includes: in response to a first operation on the first capsule notification, displaying a first card and the second capsule notification that are arranged in sequence from top to bottom on the first interface, where the first card covers the first capsule notification, and the first card includes the status information of the first service. For example, the user taps or touches and holds the capsule notification displayed on top to expand the capsule notification into a card, and other capsule notifications are sequentially displayed below the card, so that the user can view information about all the capsule notifications and detailed status information of the service corresponding to the first capsule notification.

In a possible implementation of the first aspect, the method further includes: in response to a second operation on the second capsule notification, displaying the first capsule notification and a second card that are arranged in sequence from top to bottom on the first interface, where the first capsule notification is located in the status bar, the second card is located below the status bar, and the second card includes the status information of the second service. For example, the user taps or touches and holds the second capsule notification to expand it into the second card, and at the same time, the first card shrinks into a capsule notification, so that the user can quickly see the detailed status information of the second capsule notification without shifting the visual focus.

In a possible implementation of the first aspect, the method further includes: in response to a swipe-down operation on the first capsule notification, displaying a notification center, where the notification center includes a third card and a fourth card that are arranged in sequence from top to bottom, the first card includes the status information of the first service, and the fourth card includes the status information of the second service. It can be seen that the capsule notification is an entry of the notification center, and the notification center can be quickly accessed by using the entry.

In a possible implementation of the first aspect, the method further includes: displaying a fifth card on the first interface in response to a third operation on the first card, where the fifth card includes the status information of the second service. For example, the user swipes left on the first card to remove the card, and at the same time, the capsule notification below the first card expands into a card. The user can remove a card that is not concerned according to a requirement of the user, so that service information that is more concerned by the user is displayed in limited display space.

In a possible implementation of the first aspect, the first capsule notification is displayed on top, and the first capsule notification covers a part of a display region of the second notification capsule. For example, the first capsule notification partially overlaps the second capsule notification in a horizontal direction. In this way, the user can see services of two capsule notification at the same time, and a service corresponding to a next capsule notification can be learned without an operation.

In a possible implementation of the first aspect, the first capsule notification covers a right part of the second capsule notification, and the method further includes: in response to a swipe-right operation on the first capsule notification, displaying the second capsule notification on top; and in response to a swipe-left operation on the second capsule notification displayed on top, displaying the first capsule notification on an upper layer of the second capsule notification, where the first capsule notification covers the right part of the second capsule notification. It can be learned that the capsule notification displayed on top through swiping right presents a capsule notification right shift effect, and the capsule notification displayed on top through swiping left presents a capsule left shift effect, so as to facilitate the user to view status information corresponding to different capsule notifications.

In a possible implementation of the first aspect, the method further includes: in response to a fourth operation on the first capsule notification, displaying the second capsule notification and a sixth card that are arranged in sequence from top to bottom on the first display interface, where the second capsule notification is located in the status bar, the sixth card is located below the status bar, and the sixth card includes the status information of the first service. For example, the user taps or touches and holds the capsule notification at the top layer to expand it into a card, where the card is located below the status bar, and other capsule notifications are displayed in order in the status bar. In this way, it is convenient for the user to view the detailed status information of the first service, and in addition, information displayed by the next capsule notification of the first capsule notification can be further viewed, thereby improving user viewing efficiency.

In a possible implementation of the first aspect, the electronic device includes a front camera hole at the top of a screen; and a capsule notification is located in the middle of the status bar, and the capsule notification includes a first capsule region on a left side of the front camera hole and a second capsule region on a right side of the front camera hole.

In a possible implementation of the first aspect, the first capsule region includes an icon of the first service, the second capsule region includes an icon of the second service, and the method further includes: in response to a fifth operation on the first capsule region, displaying a seventh card on the first interface, where the seventh card includes the status information of the first service; in response to a sixth operation on the second capsule region, displaying an eighth card on the first interface, where the eighth card includes the status information of the second service; and in response to a swipe-down operation on the capsule notification, displaying a notification center interface, where the notification center interface includes a ninth card and a tenth card that are arranged in sequence from top to bottom, the ninth card includes the status information of the first service, and the tenth card includes the status information of the second service. It can be learned that, in this solution, icons of two services may be displayed in a same capsule. Further, for example, a card for the service is expanded by taping or touching and holding the first capsule region, and a card for the service is expanded by taping the second capsule region. In addition, the user swipes down on the capsule notification to enter the notification center. It can be seen that the capsule notification is an entry of the notification center, and the notification center can be quickly accessed by using the entry.

In a possible implementation of the first aspect, the first capsule region includes an icon of the first service, the second capsule region includes an icon of the second service, the electronic device includes capsule notifications corresponding to at least three services, and the method further includes: in response to a seventh operation on the first capsule region, displaying an eleventh card, a third capsule notification, and a fourth capsule notification that are arranged in sequence from top to bottom on the first interface, where the eleventh card includes the status information of the first service, the third capsule notification includes the status information of the second service, and the fourth capsule notification includes status information of a third service; in response to an eighth operation on the second capsule region, displaying a twelfth card, a fifth capsule notification, and the fourth capsule notification that are arranged in sequence from top to bottom on the first interface, where the twelfth card includes the status information of the second service, and the fifth capsule notification includes the status information of the first service; and in response to a swipe-down operation on the capsule notification, displaying a notification center interface, where the notification center interface includes a thirteenth card and a fourteenth card that are arranged in sequence from top to bottom, the thirteenth card includes the status information of the first service, and the fourteenth card includes the status information of the second service. It can be learned that, in a scenario in which multiple capsule notifications exist, for example, when the user taps or touches and holds the first capsule region, the card of the service corresponding to the capsule region and another capsule notification are successively displayed from top to bottom. Similarly, when the user taps or touches and holds the second capsule region, the card of the service corresponding to the capsule region and another capsule notification are successively displayed from top to bottom. Swipe down on the capsule notification to enter the notification center. The capsule notification is an entry of the notification center.

In a possible implementation of the first aspect, the method further includes: in response to a ninth operation on the third capsule notification, displaying a sixth capsule notification, a fourteenth card, and a seventh capsule notification that are arranged in sequence from top to bottom on the first interface, where the sixth capsule notification is in the status bar, the fourteenth card is located below the status bar, the sixth capsule notification includes the status information of the first service, the fourteenth card includes the status information of the second service, and the seventh capsule notification includes the status information of the third service. For example, in a scenario in which the eleventh card, the third capsule notification, and the fourth capsule notification are displayed, tap or touch and hold the third capsule notification to expand the third capsule notification into the fourteenth card, and the eleventh card shrinks into the capsule notification at the same time. In this way, the user can quickly see the detailed status information of the second capsule notification without shifting the focus of sight.

In a possible implementation of the first aspect, the first capsule region includes an icon of the first service, and the second capsule region includes an icon of a first switch of a fourth service. It can be learned that, in this solution, status information of a service and a switch may be displayed in one capsule, and the user may directly operate the switch displayed in the capsule to implement switching of a switch state. There is no need to enter the control center or the switch setting page to control the switch, thereby reducing operations of the user and improving efficiency of operating the switch.

In a possible implementation of the first aspect, the method further includes: in response to a tenth operation on the second capsule region, displaying a switch card on the first interface, where the switch card covers the first capsule notification, the switch card includes the first switch and a second switch, the first switch is in a selected state, and a first function of the fourth service is enabled. For example, tap or touch and hold the second capsule region to expand the second capsule region into a switch card. The switch card includes another switch related to a function of the first switch. In this way, the user can directly select the another switch on the switch card without entering the control center or the switch setting page, thereby reducing operations of the user and improving efficiency of operating the switch.

In a possible implementation of the first aspect, the method further includes: in response to an operation of enabling the second switch of the switch card, enabling, by the electronic device, a second function of the fourth service, and updating the second capsule region from the icon of the first switch to an icon of the second switch. It can be learned that, after the user turns on the second switch on the switch card, the icon of the corresponding second capsule region is updated. In this way, when the second switch needs to be turned off, the user may directly operate the icon of the second switch in the second capsule region, thereby improving switch operation efficiency.

In a possible implementation of the first aspect, the method further includes: in response to a tenth operation on the second capsule region, displaying a switch card on the first interface, where the switch card covers the first capsule notification, the switch card includes the first switch and a second switch, an adjustment button of the first switch is in a first position of an adjustment progress bar, and a first function of the fourth service achieves a first effect that matches the first position. It can be learned that, in this solution, the switch including the adjustment progress bar and the adjustment button may be further displayed in the second capsule region. In this way, after the operation of expanding the second capsule region into the switch card, the adjustment button of the switch may be slid to adjust a corresponding function effect, for example, a skin smoothing switch and a whitening switch, without a need to enter the control center interface or the switch setting page, thereby reducing operations of the adjustment switch, and improving switch operation efficiency.

In a possible implementation of the first aspect, the method further includes: in response to a sliding operation on an adjustment button of the second switch, adjusting, by the electronic device, an effect corresponding to a second function of the fourth service, and updating the second capsule region from the icon of the first switch to an icon of the second switch.

In a possible implementation of the first aspect, the method further includes: displaying a control center interface in response to a swipe-down operation on the second capsule region, where the control center interface includes the first switch. It can be learned that the second capsule region is an entrance to the control center, and the control center may be accessed by swiping down on the second capsule region.

In a possible implementation of the first aspect, the method further includes: in response to an eleventh operation on the fourteenth card, displaying an application interface corresponding to the first service; and in response to a twelfth operation on the fourteenth card, displaying a floating window on the first interface, where the floating window displays the application interface corresponding to the first service, and a display area of the floating window is less than a display area of the screen of the electronic device. For example, tap or touch and hold the card to directly display an application interface of a service corresponding to the card; and swipe down on the card to display the application interface of the service corresponding to the card in the floating window. It can be learned that the user can directly operate the card to enter the application interface corresponding to the service. It can be learned that the card is an entry of the application interface of the service, thereby improving the efficiency of the user in entering the service application interface.

According to a second aspect, this application further provides an electronic device. The electronic device includes one or more processors, a memory, and a touchscreen. The memory is configured to store program code. The processor is configured to run the program code, to enable the electronic device to implement the notification display method according to any one of the implementations of the first aspect.

According to a third aspect, this application further provides a computer-readable storage medium storing instructions, where when the instructions are run on an electronic device, the electronic device is enabled to perform the notification display method according to any one of the implementations of the first aspect.

According to a fourth aspect, this application further provides a computer program product, storing instructions, where when the computer program product is run on an electronic device, the electronic device is enabled to perform the notification display method according to any one of the implementations of the first aspect.

It should be understood that descriptions of technical features, technical solutions, beneficial effects, or similar expressions in this application do not imply that all features and advantages can be achieved in any single embodiment. On the contrary, it can be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, the technical solutions, and the beneficial effects described in the embodiments may be combined in any appropriate manner. A person skilled in the art should understand that an embodiment may be implemented without one or more specific technical features, technical solutions, or beneficial effects in a specific embodiment. In other embodiments, additional technical features and beneficial effects may also be identified in specific embodiments that do not reflect all embodiments.

### BRIEF DESCRIPTION OF DRAWINGS

To describe the technical solutions in embodiments of the present invention or the conventional technology more clearly, the following briefly describes the accompanying drawings required for describing the embodiments or the conventional technology. It is clear that, the accompanying drawings in the following description show some embodiments of the present invention, and a person of ordinary skill in the art may still derive other drawings from these accompanying drawings without creative efforts.
FIG. 1A to FIG. 1D are a schematic diagram of interfaces for capsule displaying and interaction of a service according to an embodiment of this application;
FIG. 2 is a schematic diagram of notification information refreshing of a status capsule according to an embodiment of this application;
FIG. 3 is a schematic diagram of information refreshing of a dynamic notification according to an embodiment of this application;
FIG. 4A to FIG. 4D are a schematic diagram of status capsule displaying in a full screen scenario according to an embodiment of this application;
FIG. 5A is a schematic diagram of cards in a lock screen scenario according to an embodiment of this application;
FIG. 5B(1) to FIG. 5B(5) are a schematic diagram of interfaces for dynamic notification interaction according to an embodiment of this application;
FIG. 6A to FIG. 6E are a schematic diagram of a multi-capsule display style according to an embodiment of this application;
FIG. 7A to FIG. 7D are a schematic diagram of another multi-capsule display style according to an embodiment of this application;
FIG. 8 is a schematic diagram of fusion display of a capsule and a front camera hole according to an embodiment of this application;
FIG. 9A to FIG. 9D are a schematic diagram of fusion display of a capsule and a front camera hole for two services according to an embodiment of this application;
FIG. 10A(1) to FIG. 10A(5) are a schematic diagram of a capsule displaying a service and a control switch according to an embodiment of this application;
FIG. 10B(1) to FIG. 10B(5) are a schematic diagram of another capsule displaying a service and a control switch according to an embodiment of this application;
FIG. 11A to FIG. 11E are a schematic diagram of fusion of a front camera hole and a plurality of capsules according to an embodiment of this application;
FIG. 12A to FIG. 12E are a schematic diagram of another kind of fusion of a front camera hole and a plurality of capsules according to an embodiment of this application;
FIG. 13A to FIG. 13D are a schematic diagram of another kind of fusion of a front camera hole and a plurality of capsules according to an embodiment of this application;
FIG. 14 is a schematic diagram of a capsule in a screen off scenario according to an embodiment of this application;
FIG. 15 is a schematic diagram of a home screen interface displaying a card according to an embodiment of this application;
FIG. 16A and FIG. 16B are a schematic diagram of control switches of various notification display scenes according to an embodiment of this application;
FIG. 17 is a schematic diagram of display rules of various notification scenes according to an embodiment of this application; and
FIG. 18 is a flowchart of sorting for multi-capsule on-top-display according to an embodiment of this application.

### DESCRIPTION OF EMBODIMENTS

The terms "first", "second", "third", and the like in the specification, claims, and accompanying drawings of this application are used to distinguish between different objects, but are not used to limit a specific sequence.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the words such as "example" or "for example" is intended to present a related concept in a specific manner.

The notification display method provided in embodiments of this application is described in detail below with reference to the accompanying drawings.

In this embodiment of this application, a taxi travel service is used as an example to describe a notification form displayed in various scenarios and an interactive operation for the notification. A user may use a taxi travel service in a map APP for taxi hailing. For example, the user may set a start point and an end point in the map APP, and initiate a taxi hailing request. A service end platform corresponding to the taxi travel service dispatches an order in response to the taxi hailing request until the entire trip ends. The service end platform sends information about a current node to the taxi travel service. The taxi travel service on the electronic device side receives notification messages of these important nodes, and then displays the notification messages to the user. For example, the entire trip may include important nodes such as waiting for an order, the driver accepting the order, the driver going to the pick-up point, the driver arriving at the pick-up point, heading to the destination, and the end of the trip.

The following describes a service notification display method with reference to the accompanying drawings by using a taxi travel service as an example.

### I. Single-capsule display scene

### 1. Display of a single capsule

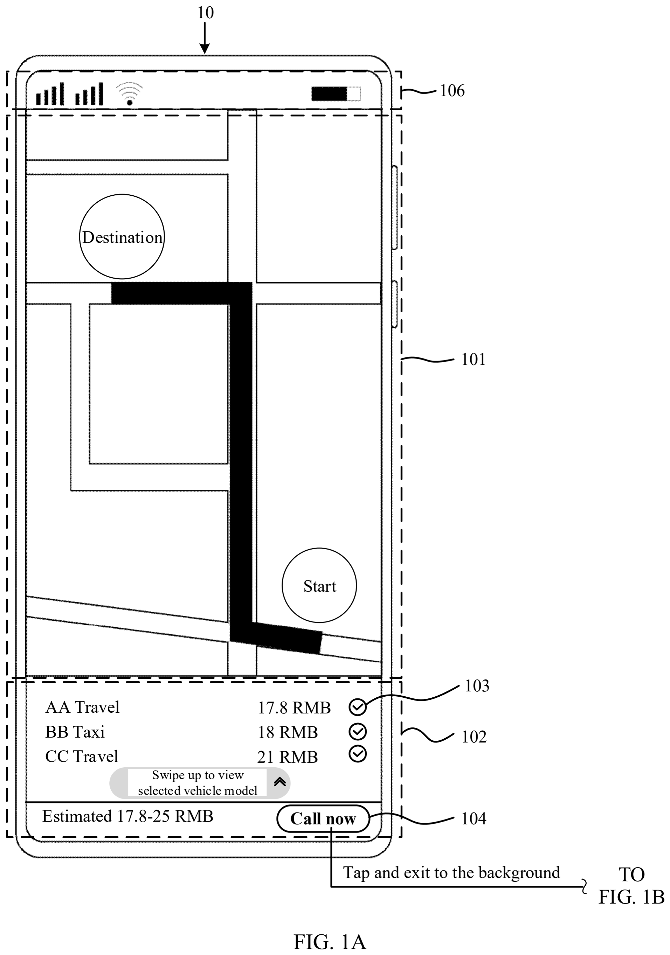

In an example, as shown in FIG. 1A, an interface 10 of a map APP mainly includes a map data display region 101, an optional vehicle model display region 102, and a status bar 106.

The status bar 106 is located at the top of the screen, and may include a current status of the mobile phone, such as a cellular network signal quality identifier, wireless network signal quality, battery power, a real-time time, or a notification icon of an application or a service, and the status bar may further include other information that varies with a status. The status bar 106 shown in FIG. 1A is merely an example. A position of each piece of information in the status bar may be not limited to that shown in the figure, and a developer may flexibly adjust the position according to a display requirement. This application sets no special limitation on information content and a location that are displayed on the status bar.

The region 101 is configured to display map data. For example, an optional trip route planned according to a start point and an end point that are set by the user may be displayed.

The region 102 is used to display an optional vehicle model, where the region 102 may display multiple optional vehicle model entries, and each optional vehicle model entry may include an optional taxi hailing platform (for example, AA Travel, BB Taxi, and CC Travel), an amount required for a current trip, and a selection button 103. The user may tap the selection button 103 to select or cancel the vehicle model corresponding to the selection button 103. In addition, the user may swipe up and down in the area of the optional vehicle models to view more optional vehicle model entries.

The region 102 further includes a "Call now" button 104. After receiving a tap operation performed by the user on the button 104, the electronic device initiates a taxi hailing request and sends the taxi hailing request to a server end, and the server end selects a matching vehicle for the user in response to the taxi hailing request.

For an important service notification, after receiving an operation performed by the user to exit a current service interface, the electronic device jumps to another application interface, and displays a status capsule corresponding to the service in the status bar, where the status capsule includes a service icon and key information of an important node of the service. In this way, even if the user exits the service interface, the latest status of the service can be learned from the status capsule, and the use of other applications or services by the user is not affected.

In this example, a display rule and a style of the status capsule are described by using an example of returning to a home screen APP from the taxi travel service.

The status bar is a status display bar common to different applications in the mobile phone. For example, display interfaces of different applications in the mobile phone may each include a status bar, and the status bars of the display interfaces of the different applications may display the same or different content.

In this embodiment, to enable the user to obtain an important notification of the taxi travel service in a timely manner, the status bar 110 includes a status capsule 111 that is used to display important information about the taxi travel service. In this example, the status capsule 111 is located on a left side of the status bar, and original mobile phone status information in the status bar may be displayed on a right side of the status bar, or some status information, such as cellular network signal quality and wireless network signal quality, may be hidden.

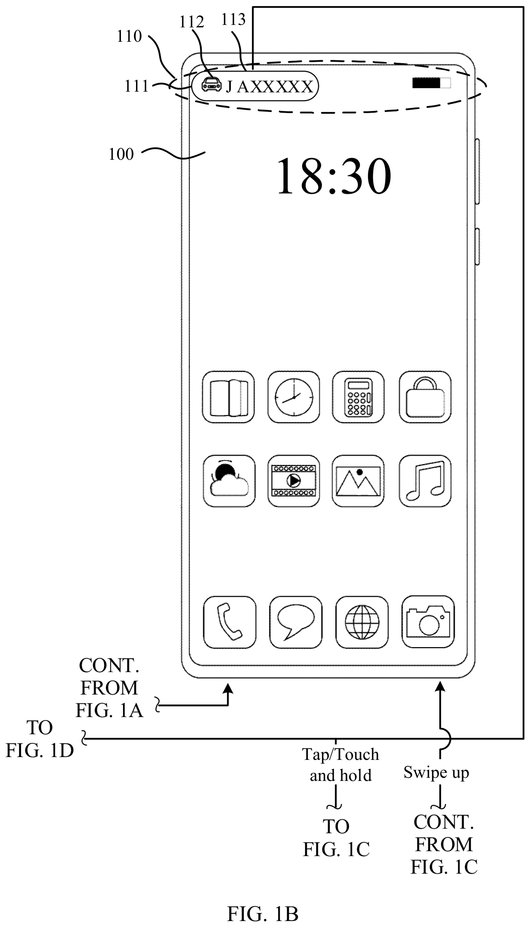

In an example, as shown in FIG. 1B, the status capsule 111 in the status bar region may be in a capsule form or may be in another shape, which is not limited in this application.

The status capsule 111 may include a service icon region 112 and a region 113 of important node information of the service. In this way, the user can intuitively learn a service type and a service status.

For example, the current service is the taxi travel service, and the region 112 of the status capsule displays an icon of the taxi travel service. The region 113 is used to display important information of the taxi travel service. In this way, the user has a clear view of a current status of the taxi travel service.

In an example embodiment, the region 113 displays key information of a current important node of the service, and in a case where the key information includes multiple strings that cannot be displayed simultaneously in the region 113, the key information may be divided into at least two strings, and the strings may be displayed in turn within the region 113. In addition, the key information displayed in the region 113 may be switched according to different important nodes of the current service.

In an example, the key information includes two strings. For example, the foregoing two strings are rotated for playback once every first preset duration, for example, 2.5s. The key information is frozen for display after rotation for second preset duration (for example, 5s). If there is no new status information within third preset duration (for example, 1 min), the rotation is triggered again.

For example, if a current important node of the taxi travel service is that the driver has accepted the order and is heading for the pick-up point, the region 13 scrolls to display the license plate number of the vehicle accepting the order and the estimated time of arrival at the pick-up point, that is, scrolls to display "J AXXXX" and "About 3 minutes". For example, after the license plate number is displayed for 2.5s, the estimated time of arrival at the pick-up point is displayed through switching. After 5s, the license plate number is frozen and displayed. If there is no new information in one minute, the foregoing two pieces of information are triggered to be played on a rotation basis again.

In addition, in some scenarios, the information displayed in the region 113 of the status capsule 111 may be updated in real time according to a service status, for example, an important node (that is, a service status) of the taxi travel service in this example is updated, and content displayed in the status capsule 111 is also updated.

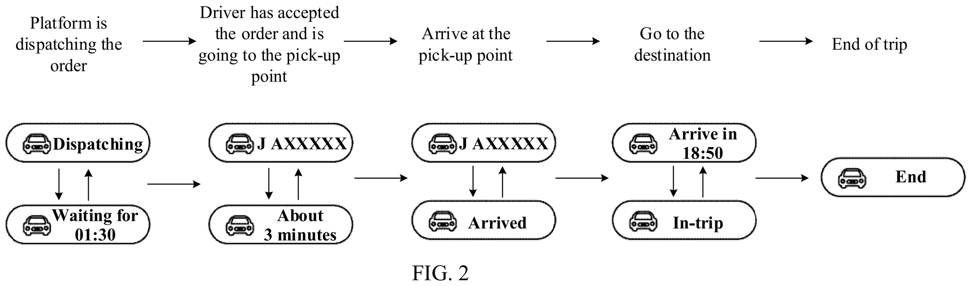

The following describes a process of switching/rotating status information corresponding to the status capsule of the taxi travel service with reference to FIG. 2.

After the user initiates a taxi hailing request, the following important nodes may be included: waiting for the platform to dispatch an order, the driver accepting the order and going to the pick-up point, arriving at the pick-up point, going to the destination, and ending the trip.

As shown in FIG. 2, in the node of waiting for the platform to dispatch an order, the status capsule displays an icon of the taxi travel service and key information of the current node, and strings corresponding to the key information are displayed in turn. For example, in this example, the status capsule displays "Dispatching" and "Waiting time", such as "Waiting for 1 min and 30s", alternately. The two pieces of information in a same state are played in turn at an interval of preset duration (for example, 2.5s). In this example, after "Dispatching" is displayed for 2.5s, the status capsule switches to display waiting time information, and the waiting time information is refreshed according to actual waiting duration. After switching the display for 5 seconds, it freezes on the key information. If no new information is available in one minute, the rotation is triggered again.

Currently, in the node at which the driver accepts the order and goes to the pick-up point, the status capsule alternately displays the license plate number "J AXXXXX" of the vehicle and the arrival time "About 3 minutes". A rule for alternately displaying strings is the same as the alternate playback rule for the node of waiting for the platform to dispatch an order. Details are not described herein again.

Currently, in the node of arriving at the pick-up point, the status capsule includes the icon of the taxi travel service, and displays the license plate number of the vehicle accepting the order and arrival information in turn. Optionally, waiting duration after the vehicle arrives at the pick-up point may be further displayed, that is, three pieces of information are played in turn: the license plate number, the arrival information, and the waiting duration.

Currently, in the node of going to the destination, the status capsule includes the icon of the taxi travel service, and displays an estimated time of arrival at the destination "Arrival time 18:50" and information "In-trip" in turn.

At the end of the current trip, the status capsule includes the icon of the taxi travel service and information "End".

In addition, the current service end state stays for preset duration. If there is no operation or other notification information after the preset duration, the status capsule 111 automatically disappears. For example, after the taxi hailing trip ends, the status capsule displays "End" for 5 minutes. If no operation or other notification information is displayed within the 5 minutes, the status capsule disappears automatically.

The manner of alternately playing key information of a same state displayed in the status capsule shown in FIG. 2 and the manner of refreshing key information following different states are also applicable to another service, and details are not described herein again.

### 2. Interactive operation for the status capsule

### (1) Tap or touch and hold the status capsule to expand the status capsule into a card

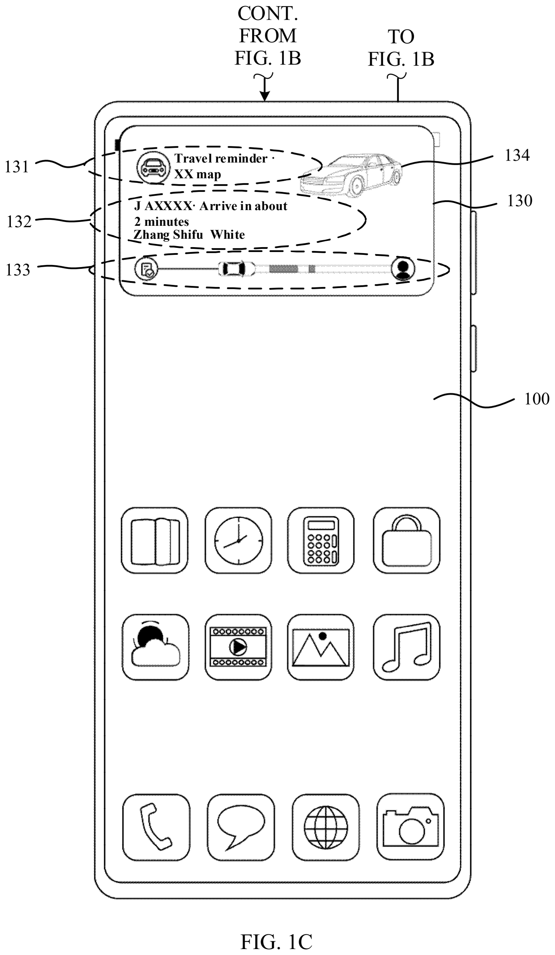

After the electronic device receives a tap or touch and hold operation performed by the user on the status capsule 111, the status capsule expands into a card. That is, the user touches and holds the status capsule 111 shown in FIG. 1B to jump to the interface shown in FIG. 1C.

As shown in FIG. 1C, the interface includes a home screen 100 at a bottom layer and a card 130 at an upper layer of the home screen 100. The card 130 includes a title region 131, an information region 132, a service status region 133, and a service icon 134.

In some application scenarios (for example, a travel service), content displayed in the information region 132 and the service status region 133 of the card 130 may also be refreshed in real time according to a service status. Therefore, the card 130 is also referred to as a dynamic notification.

The title region 131 includes a service icon and a service name. For example, the service in this example belongs to a type of a travel reminder, and is specifically a name of a map APP, such as XX map.

The information region 132 includes key information of an important node of the service. For example, in this example, the information region 132 is used to display key information of a node in which a driver is currently located during a ride. For example, when the driver arrives at the pick-up point, the displayed key information may include information such as the license plate number "J AXXXX" of the vehicle accepting the order, a vehicle color "white", driver information "Zhang Shifu", and an expected time "About 2 minutes" to arrive at the pick-up point.

The service status region 133 includes a service progress bar that is visually and dynamically displayed. For example, this example is a taxi travel service of a map APP, and a progress of a current node is displayed. In a stage in which the driver has accepted the order and goes to the pick-up point, the progress bar shows the trip progress of the vehicle that has accepted the order going to the pick-up point, and the distance from the vehicle that has accepted the order to the pick-up point and the real-time road condition of the route (that is, the route of the vehicle that has accepted the order going to the pick-up point) are displayed in the progress bar in real time, that is, the route is smooth or congested.

The service icon 134 may enable the user to more intuitively learn a service corresponding to a current dynamic notification. For example, if this example is a taxi travel service in a map APP, a vehicle icon shown in the figure is displayed.

Similar to the status capsule update status information, content displayed in the information region 132 and the service status region 133 of the card 130 follows the service status update in real time.

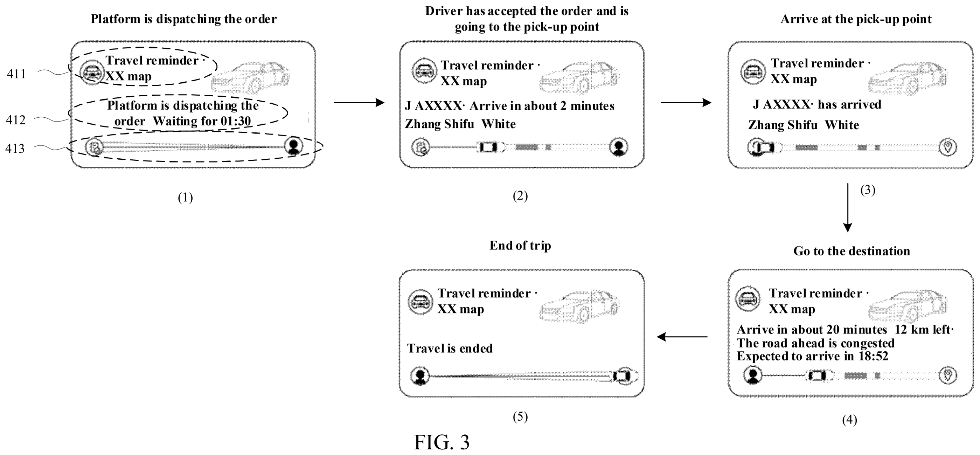

In an example, the status of each node of the taxi service is used as an example. The current node is waiting for the platform to dispatch an order. As shown in (1) in FIG. 3, the region 132 displays "Platform is dispatching the order. 01:30 has been waited", and the region 133 has no travel progress.

Currently, the driver has accepted the order and goes to the pick-up point. As shown in (2) in FIG. 3, the region 132 displays information about the vehicle that has accepted the order and the driver, and the region 133 displays a distance from a current location of the vehicle that has accepted the order to a passenger pick-up point (an end point of this trip) and a real-time road condition of the trip. A start point of the trip is a location in which the vehicle is located when receiving the order. In addition, the region 133 further refreshes a real-time location of the vehicle that has accepted the order.

Currently, the vehicle accepting the order has reached the pick-up point. As shown in (3) in FIG. 3, the region 132 displays information about the vehicle that has accepted the order and the driver, for example, "J AXXXX has arrived, Zhang Shifu, White". In the region 133, the trip start point is updated to the pick-up point, and the trip end point is updated to a destination of the passenger. In addition, a real-time location of the vehicle that has accepted the order on the route and a real-time road condition of the route may be further displayed.

The current node is going to the destination, as shown in (4) in FIG. 3, the region 132 displays expected duration and time of arrival at the destination, a remaining distance, and a real-time road condition. The region 133 displays a real-time location of the current vehicle on the current trip and a real-time road condition of the route.

Currently, the vehicle has arrived at the destination (that is, the trip ends). As shown in (5) in FIG. 3, the region 132 shows that the trip is ended. The region 133 is updated to no travel progress.

In this embodiment, the taxi travel service is merely used as an example to describe a dynamic notification status information update process. For another service, content displayed in the regions 132 and 133 in the dynamic notification is updated according to actual service content of the service.

### (2) Swipe down on the status capsule to enter the notification center interface

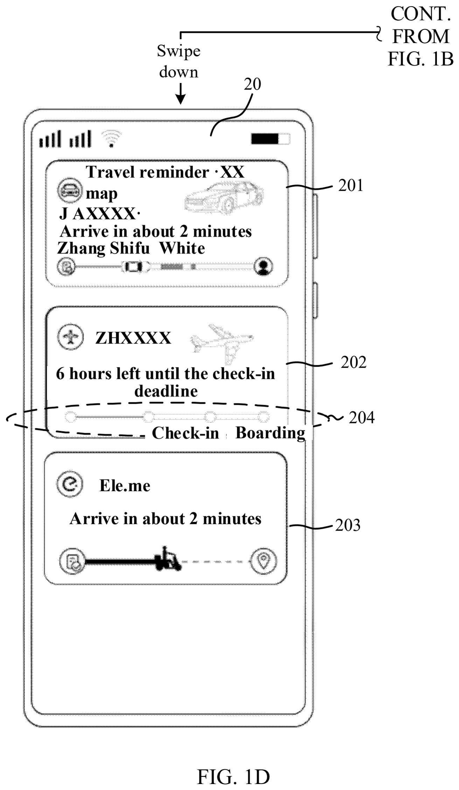

After receiving the swipe-down operation performed by the user on the status capsule 111, the electronic device enters the notification center interface, that is, the user swipes down on the status capsule 111 shown in FIG. 1B to jump to the interface 20 shown in FIG. 1D, that is, the notification center. It can be seen that the status capsule is an entrance to the notification center.

In the notification center, the dynamic notification is arranged before a common notification, the dynamic notification refers to a service notification in which a service status changes, for example, a notification of a taxi travel service, a notification of a flight travel service, and a notification of a food delivery service. For example, service statuses of a taxi travel service may include waiting for the platform to dispatch an order, a driver accepting the order and going to a pick-up point, arriving at the pick-up point, going to the destination, and ending the trip. A common notification refers to notification content of a service whose service status remains unchanged, for example, an SMS message notification or a notification of an instant messaging APP.

When there are multiple dynamic notifications, the dynamic notifications are sorted in descending order of importance. If at least two dynamic notifications are of the same importance, the dynamic notifications are sorted in ascending order of time of arrival at a next important node. For example, in this example, a priority of the taxi travel service is higher than that of the flight travel service. Therefore, the card 201 of the taxi travel service in the notification center is arranged before the card 202 of the flight travel service.

Common notifications are arranged in order of receiving time from the earliest to the latest.

As shown in FIG. 1D, the notification center interface may include multiple cards, and the dynamic notification is arranged before the normal notification. In addition, a card corresponding to the status capsule 111 in the dynamic notifications is in the first position, and other dynamic notifications are arranged in an order of time from the latest to the earliest.

For example, in this example, the card 201 of the taxi travel service is ranked first, followed by the card 202 of the flight travel service and the card 203 of the food delivery service. This example shows only the foregoing three notifications, and the notification center may include more notifications. Content displayed on the card 201 is the same as content displayed on the card 130 shown in FIG. 1C.

As shown in FIG. 1D, the card 202 includes information about an important node of flight travel, for example, text information "6 hours left until the check-in deadline", and a progress bar 204 that can indicate a current node in real time. In this example, the important nodes of the flight travel service include check-in and boarding, and the current node is in the non-check-in stage. The card 203 includes specific content of the food delivery service, for example, a real-time location of the delivery person and an expected delivery time.

### (3) Swipe up to make the capsule disappear

The electronic device responds to a swipe-up operation (or a tap and swipe-up operation, that is, swipe up while pressing) on the status capsule 111, and the status capsule 111 disappears, that is, the status capsule 111 is hidden. When the service status information of the status capsule 111 is updated, the status capsule 111 that includes the latest service status information is displayed again.

### (4) Hide the status capsule in a full-screen scenario

In addition, the status bar is an optional display item, and a display interface of an application may not include the status bar. For example, a status bar may be hidden in a scenario that requires full screen display (for example, taking photos, recording videos, or playing games). In this scenario, the user swipe down on the status bar region, and the status bar including the status capsule is displayed.

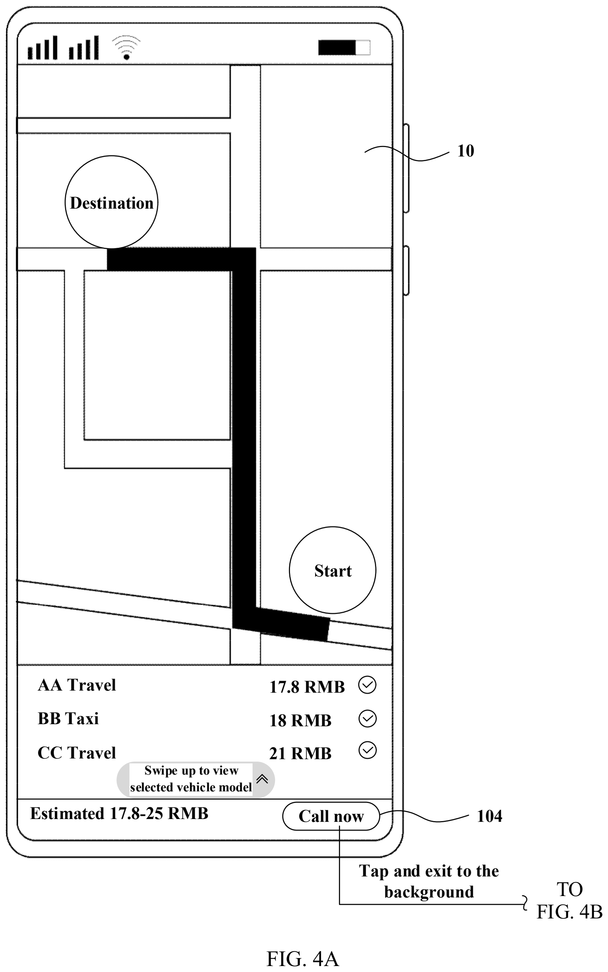

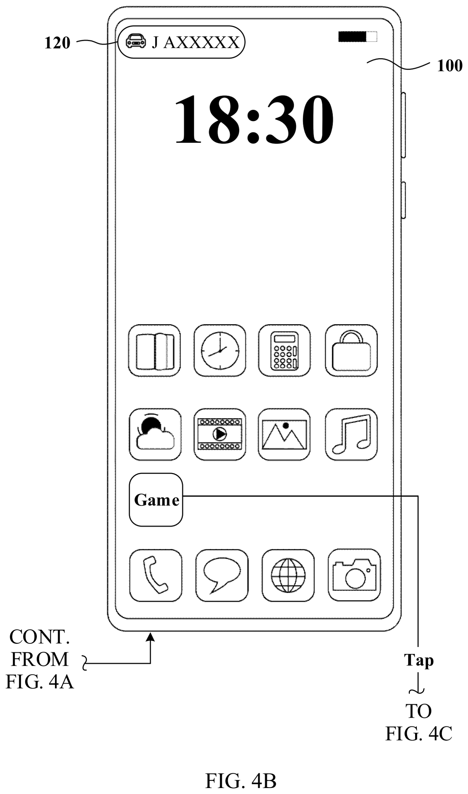

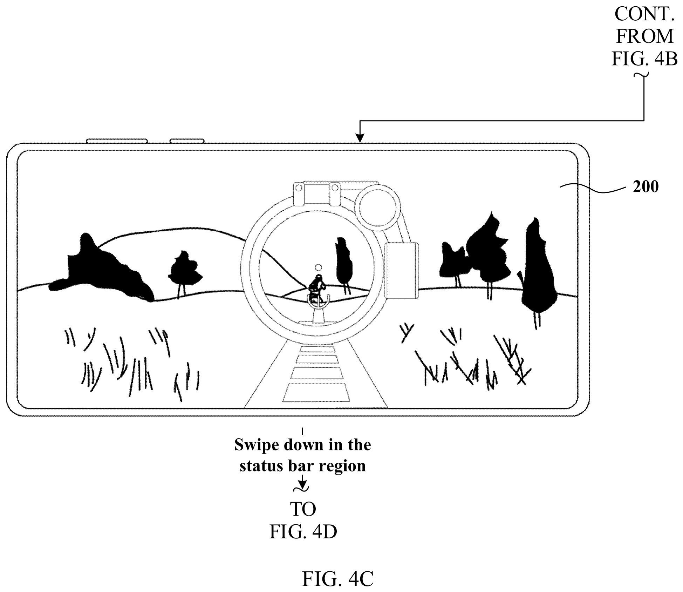

For example, as shown in FIG. 4A, the electronic device displays a taxi travel service interface of a map APP, receives a tap operation of a user on a "Call now" button 104 to initiate a taxi hailing request, and then receives an operation of exiting the current interface. In response to the operation, the electronic device jumps to the interface shown in FIG. 4B, that is, a home screen interface, and a status bar of the home screen includes a status capsule 120. In this case, if the electronic device receives a tap operation on an icon of a game APP on the home screen, the electronic device jumps to the interface 200 of the game APP shown in FIG. 4C, and the interface 200 displays game image data in full screen.

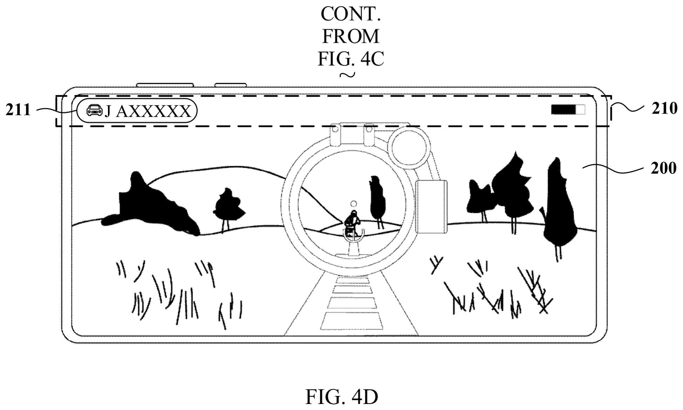

When displaying the interface 200 of the game APP, the electronic device jumps to the interface shown in FIG. 4D after receiving a swipe-down operation performed by the user on the status bar region, where the status bar 210 is at the top of the interface, and the status bar 210 includes a status capsule of the taxi travel service. That is, in the full-screen display state, after receiving the swipe-down operation on the status bar region, the electronic device displays the status bar including the status capsule. In this way, the user does not need to exit the currently running game APP, and a real-time status of the taxi travel service can be learned from the status capsule 211 of the status bar, and full-screen experience of the user is not affected.

The foregoing content uses a taxi travel service in a map APP as an example to describe a display method such as appearance, disappearance, and interactive operation of a status capsule. Certainly, the foregoing display method of a status capsule is also applicable to other services, for example, a food delivery service, an express delivery service, a subway travel service, a movie watching service, and the like. Display content of a status capsule changes adaptively according to a service characteristic of another service. Details are not described herein again.

In summary, it may be learned that, after an application interface of a service (which may be referred to as a first service) is exited, if an important notification of the service is received, a status capsule corresponding to the service is displayed in the status bar, and the status capsule displays a service icon and key status information of the service. In this way, the user can quickly learn a status of the service by using information displayed in the status capsule, so as to ensure that the user does not miss an important notification. In addition, the use of other applications or services is not affected. In addition, an interactive operation is provided for the status capsule. For example, tap or touch and hold the capsule to expand the capsule into a dynamic notification, or swipe down on the capsule to enter the notification center. In this way, the user does not need to exit the current application and enter the interface to be displayed, and the status capsule in the direct operation status bar jumps to the interface corresponding to the operation, thereby reducing user operations, and improving efficiency of entering the service-related interface.

### II. Display manner of dynamic notification

### (1) Display scenario of dynamic notification

### ① Expand the status capsule into a dynamic notification

In this embodiment of this application, as shown in FIG. 1A to FIG. 1D, a card 130 shown in FIG. 1C is displayed on an upper layer of an application interface (in this example, a home screen) in response to a tap or touch and hold operation on the status capsule 111. In response to a swipe-down operation on the status capsule 111, a jump from the application interface to an interface 20 of the notification center shown in FIG. 1D is implemented, and the notification center includes a card 201.

In an example embodiment, in a scenario in which multiple notifications need to be displayed, the notifications are alternately displayed in a sequence from early to late in terms of notification reception time without considering notification types (for example, dynamic notification and normal notification), for example, the card in FIG. 1C is replaced with a card of another service or application, such as an information notification from Contact. A dynamic notification takes precedence over a normal notification of the same time.

In an example embodiment, the dynamic notification in the notification center is displayed on top, and if there are multiple dynamic notifications, the dynamic notifications are arranged in a sequence from early to late in terms of notification reception time.

In a scenario in which both the dynamic notification and the normal notification exist, the dynamic notification region is located above the normal notification region, that is, the dynamic notification is preferentially displayed.

### ② Dynamic notification of the lock screen

In an application scenario, for example, after receiving a pressing operation on a power button performed by the user in an off-screen state, the electronic device enters a lock screen state from the off-screen state, that is, jumps from the off-screen interface to the lock screen interface.

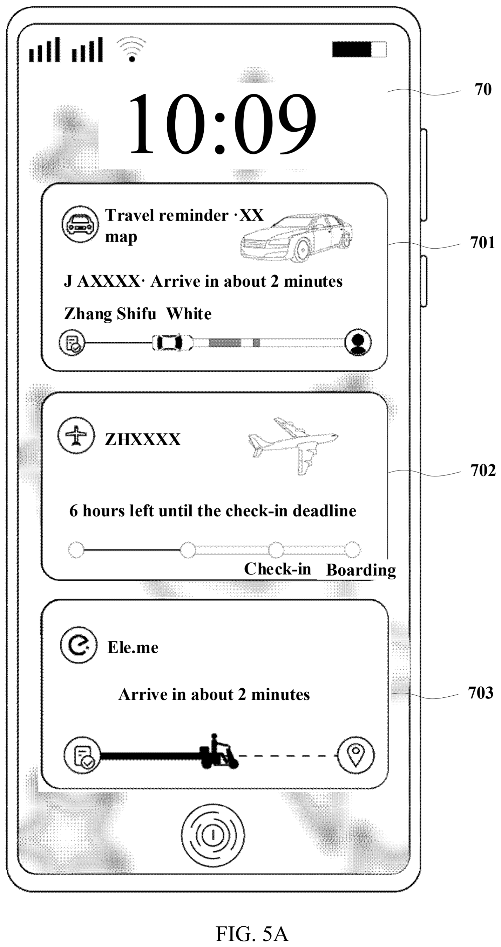

In an example embodiment, as shown in FIG. 5A, the lock screen interface 70 includes a lock screen wallpaper interface located at a bottom layer and at least one card located at an upper layer of the lock screen wallpaper interface. When at least two notifications exist, an arrangement rule of the notifications is the same as a notification arrangement rule of the notification center, and details are not described herein again.

In this example, the notifications of the lock screen are successively the card 701 of the taxi travel service, the card 702 of the flight travel service, and the card 703 of the food delivery service from top to bottom. Content included in each card is the same as that in the notification center, and details are not described herein again.

When the electronic device is in a lock screen state, a card is displayed, so that the user can directly obtain a service type and a state from the card without unlocking. In addition, a card of an important notification is in the first place and will not be drowned by another notification to ensure that the user does not miss important notifications.

### (2) Interactive operation of a dynamic notification

### ① Tap/Touch and hold to enter the application interface

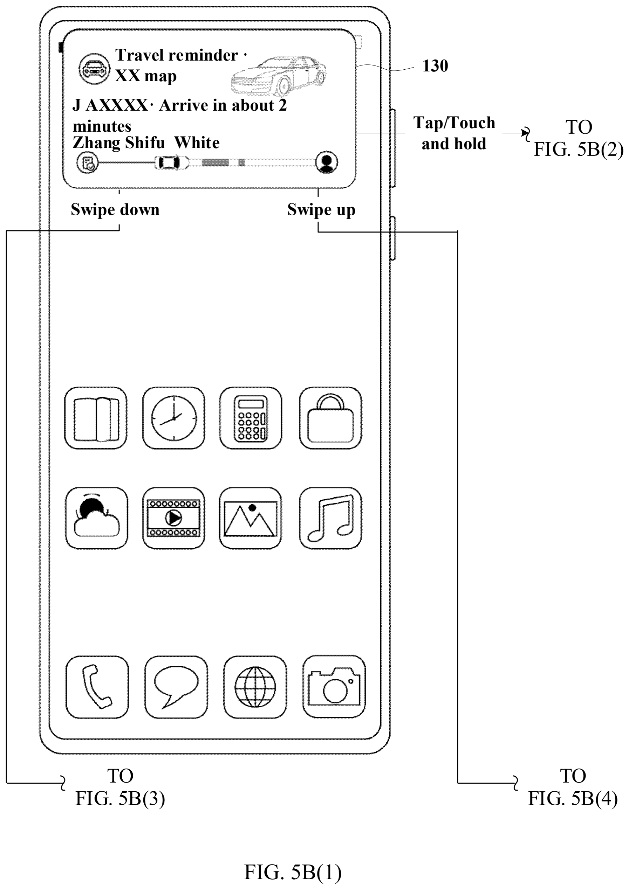

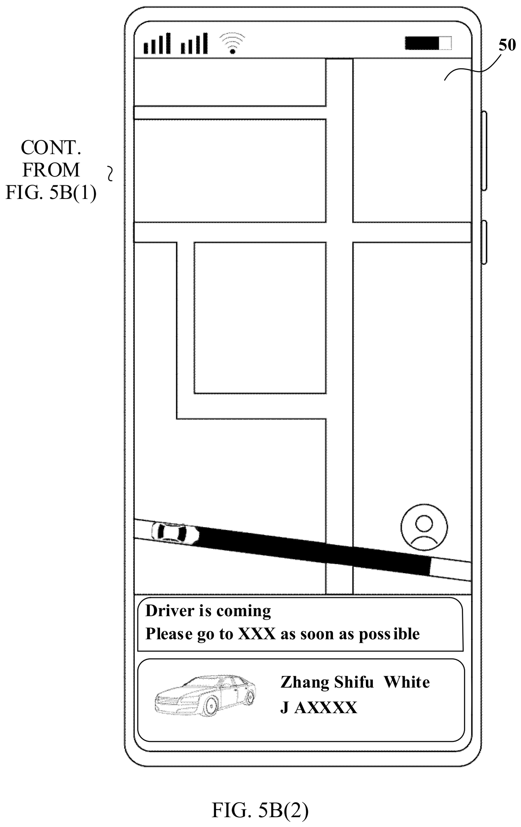

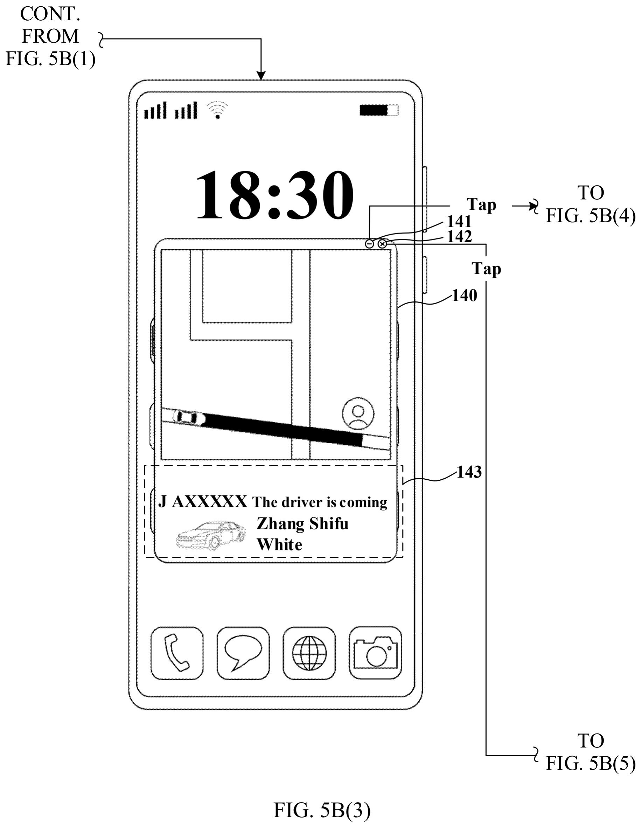

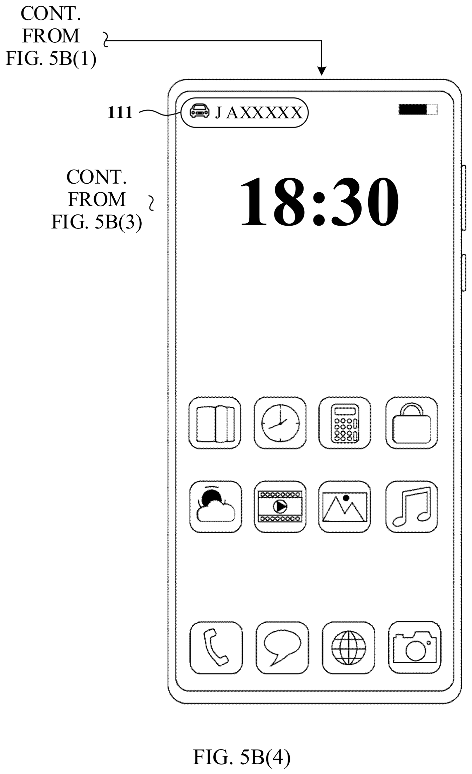

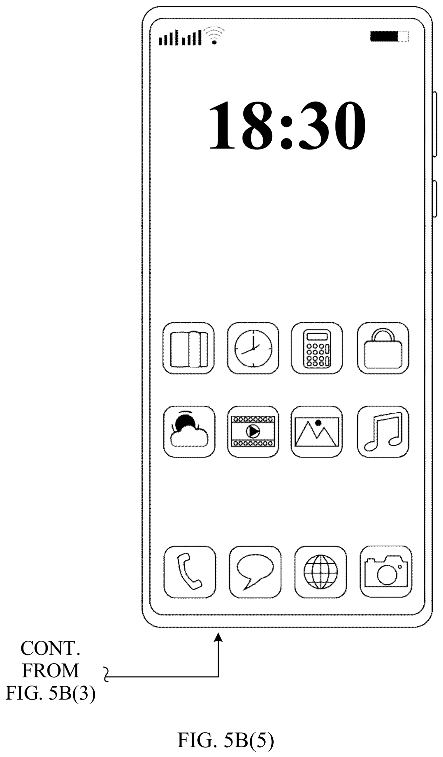

In response to a tap or touch and hold operation on the card 130 shown in FIG. 5B(1), the electronic device jumps to an application interface of a service corresponding to the dynamic notification shown in FIG. 5B(2). For example, this example is an application of a taxi travel service, that is, an interface of a map APP.

### ② Swipe down to enter a small window and display a service interface

In response to a swipe-down operation on the card 130, the electronic device jumps to the interface shown in FIG. 5B(3). As shown in FIG. 5B(3), the interface includes a home screen located at a bottom layer and a small window 140 of an application located at an upper layer of the home screen. A display area of the small window 140 is less than a display area of the screen. The small window 140 displays an application interface of a service corresponding to the card 130. In this example, the small window 140 is configured to display the interface of the map APP.

In addition, in response to a tap operation on the small window 140, a jump to an interface of a corresponding application, that is, the interface of the map APP shown in (2) in FIG. 5, is implemented.

In an example, the small window 140 may further include a minimize button 141 and a close button 142. In response to an operation on the minimize button 141, jump to the interface shown in FIG. 5B(4), that is, the small window 140 shrinks to the capsule 421. In response to an operation on the close button 142, jump to the interface shown in FIG. 5B(5), that is, close the small window 140 and do not display the capsule.

### ③ Swipe up on the card to shrink the card to a capsule

The electronic device jumps to the interface shown in FIG. 5B(4) in response to a swipe-up operation on the card 130, that is, the card 130 shrinks to the capsule 111.

In addition, if no other operation is performed after the card 130 displays the preset duration, the card 130 disappears, and the status capsule is displayed, for example, the card 130 shrinks to the status capsule 111 when there is no operation for 5s. The card 130 automatically disappears after preset duration after a task ends. For example, the card 130 automatically disappears after 5s after the taxi travel trip ends.

### III. Multi-capsule display scene

The following describes, with reference to the accompanying drawings, a display manner of status capsules in a scenario in which an electronic device needs to present important notifications of at least two services.

In a scenario in which multiple capsules exist, sorting is performed according to a priority and time of a task corresponding to each capsule.

### 1. Multi-capsule display manner 1

In an example embodiment, only the first-ranked status capsule is displayed in the status bar, and an expand identifier is displayed below the status capsule. The expand identifier is used to indicate that another status capsule is expanded and displayed after a swipe-down operation is performed on the status capsules, for example, up to five status capsules may be displayed.

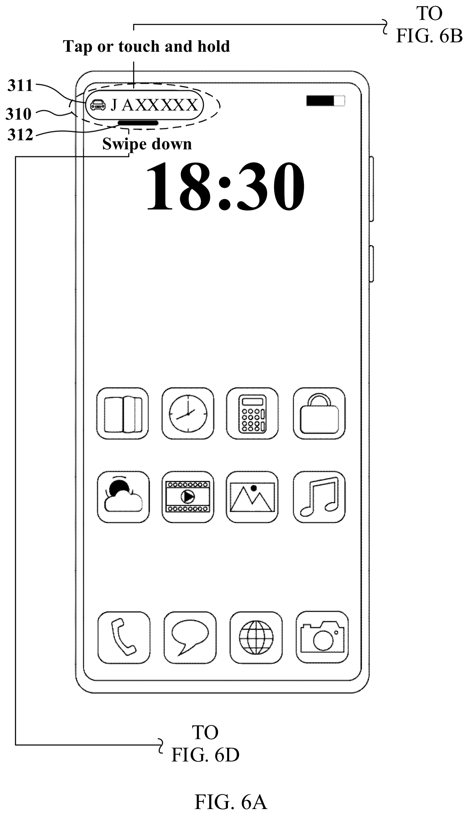

In an example, as shown in FIG. 6A, a status bar region (that is, a display region at the top of the screen) of the home screen 100 includes a capsule display region 310, and the capsule display region 310 includes a status capsule 311. In the case of multiple status capsules, in order to indicate that another status capsule still exists, the status capsule further includes a expand identifier 312 located below the status capsule.

### ① Tap/Touch and hold the status capsule to expand the status capsule into a card

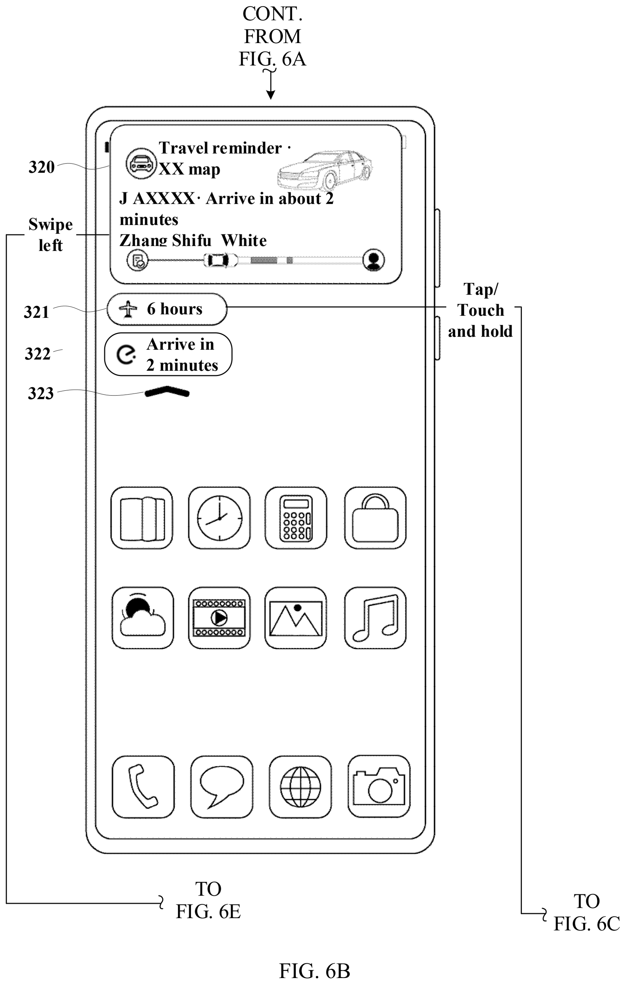

In response to a tap or touch and hold operation on the status capsule 310 shown in FIG. 6A, the electronic device jumps to the interface shown in FIG. 6B, and the status capsule 310 expands into the card 320 and is located at the top. In addition, another status capsule that is not ranked first, the status capsule 321 of the flight travel service, the status capsule 322 of the food delivery service, and the folding identifier 323 are sequentially displayed below the card.

### ② Tap/Touch and hold another capsule to expand the capsule into a card, and the current card shrinks to a capsule

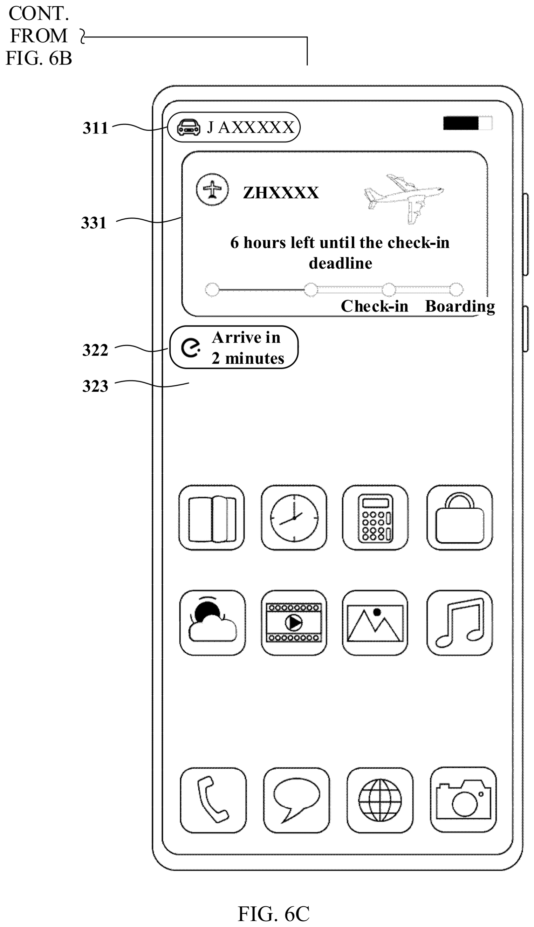

The electronic device responds to a tap operation on the status capsule 321 shown in FIG. 6B. As shown in FIG. 6C, the status capsule 321 that is tapped expands into a card 331. In addition, the card 320 shrinks to a status capsule 311, and the status capsule 311 is located above the card 331, and positions of other capsules remain unchanged. That is, any status capsule is tapped to expand into a card, and at the same time, the card that is expanded before the tap operation shrinks into a capsule, and arrangement of the card and another capsule remains unchanged, that is, arrangement of the card corresponding to the status capsule is the same as arrangement of the status capsule.

### ③ Swipe down on the status capsule to enter the notification center

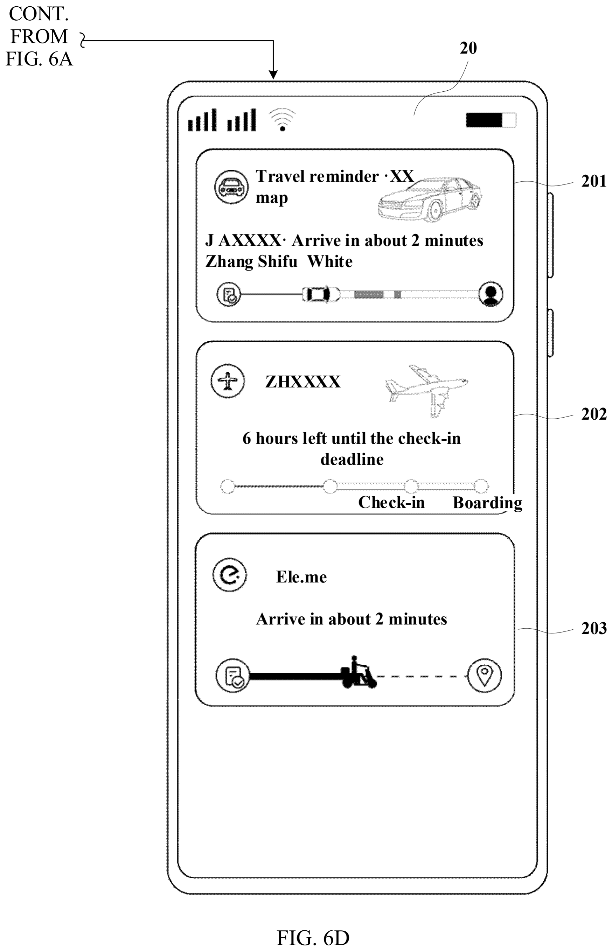

In response to a swipe-down operation on the status capsule 311 shown in FIG. 6A, jump to the notification center interface. An arrangement order of the cards in the notification center is the same as that of the status capsules. As shown in FIG. 6D, the card 201 of the taxi travel service is in the first place, and the card 202 of the flight travel and the card 203 of the food delivery service follow in sequence. It can be seen that the arrangement order of the cards is the same as that of the capsules in FIG. 6B.

### ④ Swipe left to remove the card, and the lower capsule moves upward for replacement and expands into a card

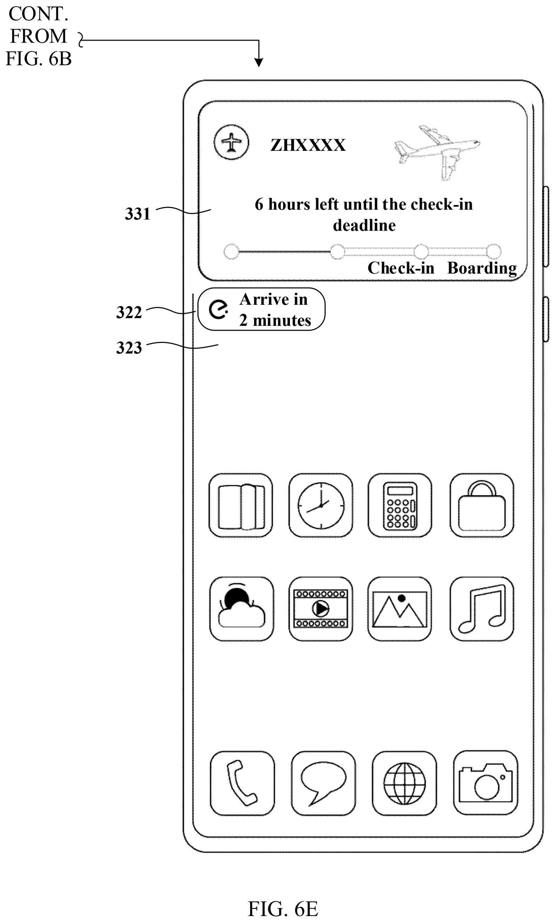

For example, in response to the swipe-left operation on the card 320 shown in FIG. 6B, jump to the interface shown in FIG. 6E, that is, the card 320 is removed. At the same time, the status capsule 321 below the card 320 moves upward for replacement and is expanded into the card 331. By analogy, the status capsule 322 moves upward to fill the position of the status capsule 321.

### ⑤ Swipe up on the card and the capsule display region, shrink the card to a capsule, and display only the top capsule

In response to a swipe-up operation on the status capsule/card display region shown in FIG. 6B or FIG. 6C, the electronic device shrinks the card into a capsule, and hides a status capsule arranged in a non-first position, that is, jumps to the interface shown in FIG. 6A.

### ⑥ Swipe up to make the capsule disappear

The status capsule 311 and the expand identifier 312 disappear in response to a swipe-up or tap and swipe-up operation (that is, swipe up while pressing) on the status capsule 311 shown in FIG. 6A, and the status capsule 311 is displayed again until the status of the service corresponding to the status capsule 311 is updated.

In another example embodiment, the electronic device displays all the status capsules in response to a swipe-down operation on the status capsule 311 shown in FIG. 6A, and the status capsule 311 is ranked first. That is, the status capsule 311 in this embodiment does not expand into a card, and other operations are the same as those in the embodiment shown in FIG. 6A to FIG. 6E. Details are not described herein again.

### 2. Multi-capsule display manner 2

In an example embodiment, at least two status capsules partially overlapping in the horizontal direction are displayed in the state bar, and the status capsule at the top layer is slid to the right to display a next status capsule of the status capsule. The sliding to the right continues until the last status capsule is displayed. For example, up to 5 status capsules may be displayed.

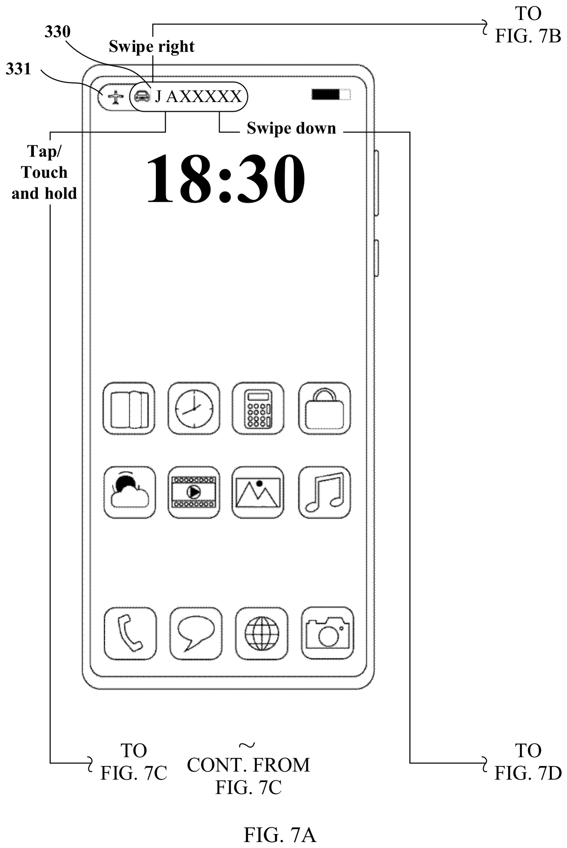

In an example, as shown in FIG. 7A, the status bar region of the home screen 100 includes two partially overlapping status capsules 330 and 331. In addition, the status capsule 330 is located at a top layer, and the status capsule 331 is located at a lower layer of the status capsule 330, and a preset distance between the status capsule 330 and the status capsule 331 in a horizontal direction is less than a length of the status capsule, that is, the status capsule 330 and the status capsule 331 partially overlap in a horizontal direction, for example, the status capsule 330 covers a right part of the status capsule 331.

In this embodiment, the following interactive operations may be performed on the status capsule:

### ① Swipe right to display a next capsule and swipe left to display a previous capsule

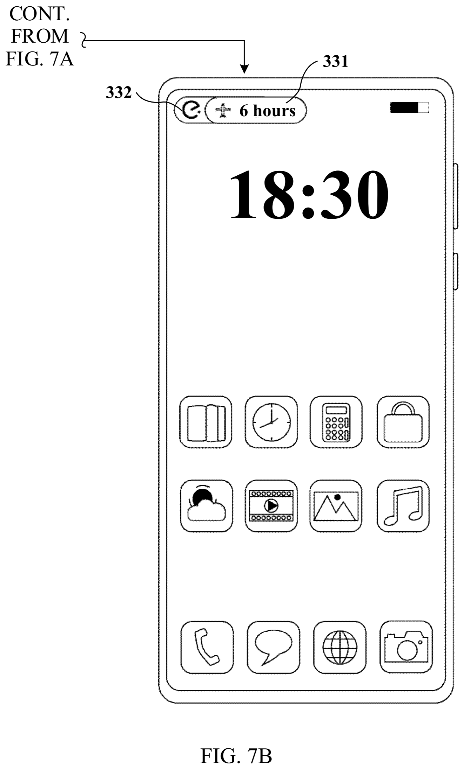

In this example, the electronic device jumps to the interface shown in FIG. 7B in response to a swipe-right operation on the status capsule 330 at the top layer, that is, the capsule at the top layer switches to the status capsule 331, and the capsule at the bottom layer switches to the status capsule 332, that is, presents a right shift effect of the status capsule.

The electronic device jumps to the interface shown in FIG. 7A in response to a swipe-left operation on the status capsule 331 at the top layer shown in FIG. 7B, that is, presents a left shift effect of the status capsule.

An example of FIG. 7A to FIG. 7D is two capsules partially overlapping in a horizontal direction. In actual application, three or more capsules partially overlap.

### ② Tap or touch and hold the capsule at the top layer to expand the capsule into a card and display another capsule in the status bar

In an embodiment, the electronic device may further respond to a tap or touch and hold operation on the status capsule located at the top layer, the status capsule at the top layer expands into a card located below the state bar, and other capsules behind the status capsule at the top layer are sequentially displayed in the capsule display region in the state bar.

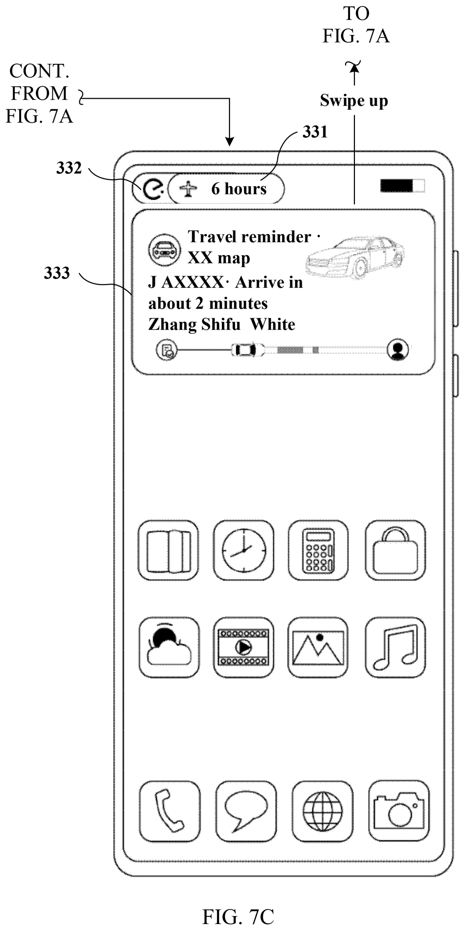

For example, in this example, after the user taps or touches and holds the status capsule 330 shown in FIG. 7A, the electronic device jumps to the interface shown in FIG. 7C. The status capsule 330 is expanded into a card 333, and the card 333 is located below the status bar. Content of the card 333 is the same as that of the card 130 shown in FIG. 1C. Details are not described herein again. At the same time, other capsules after the status capsule 330, such as the status capsule 331 of the flight travel service and the status capsule 332 of the food delivery service, are sequentially displayed in the state bar.

### ③ Swipe up on the card to shrink the card to a capsule

In an embodiment, the electronic device returns to the interface shown in FIG. 7A in response to a swipe-up operation on the card 333 shown in FIG. 7C, that is, the card 333 shrinks to the status capsule 330. In addition, the status capsule 330 of the taxi travel service is located at the top layer, and a lower layer of the status capsule 330 is the capsule of the flight travel service.

### ④ Swipe down on the capsule to enter the notification center

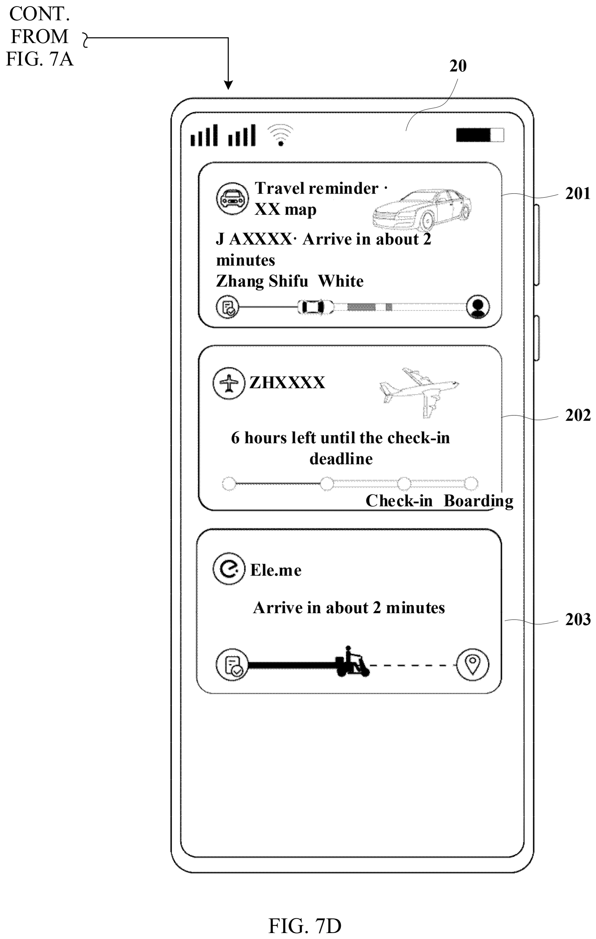

In an embodiment, the electronic device enters the notification center in response to a swipe-down operation on the status capsule 330 shown in FIG. 7A. As shown in FIG. 7D, arrangement of the cards in the notification center is the same as that of the status capsules.

### ⑤ Swipe up to make the capsule disappear

In addition, in response to a swipe-up operation or a tap and swipe-up operation (that is, swipe up while pressing the status capsule) on the status capsule 330 shown in FIG. 7A, the status capsule disappears, and the status capsule 330 is displayed again until the status of the service corresponding to the status capsule 330 is updated. The swipe-up operation effect of the status capsule shown in FIG. 7B is the same, and details are not described herein again.

In conclusion, for a scenario in which multiple service notifications need to be displayed, the notification display method provided in this embodiment may display information that includes multiple capsules in the status bar. For example, the information may be an expand identifier or another capsule partially covered by the first capsule. The user is prompted by using the information that multiple capsules exist. The user performs a corresponding operation on the capsule in the status bar to view all the capsule notifications. In this way, information about all important notifications can be learned clearly, and there is no need to enter the notification center to view and search important notifications one by one, so that efficiency of viewing multiple important notifications is improved.

### IV. Display solution for combination of the status capsule and the front camera hole

As the full screen is widely applied to electronic devices, a camera hole that is used to dispose a front-facing camera is generally disposed on the top of the screen of the electronic device. When the screen is lighted to display content, the front-facing camera hole has no pixel and cannot display content, that is, black is presented in the front-facing camera hole, which is inconsistent with a display region of the screen.

To reduce an abrupt sense of the front camera hole, an embodiment of this application provides a solution for displaying a status capsule in combination with the front camera hole. To be specific, a capsule is displayed at the front camera hole, a color of the capsule is black, and the front camera hole is also black, and finally the front camera hole is presented as a part of the capsule.

### 1. Combination of a single capsule and the front camera hole

### (1) One capsule is associated with one service

That one capsule is associated with one service means that one status capsule can display notification information of one service.

A status capsule corresponding to a single service includes a first capsule region and a second capsule region that are respectively located on the left and right sides of the front camera hole. In an example, the first capsule region is used to display a service icon, and the second capsule region is used to display a service status.

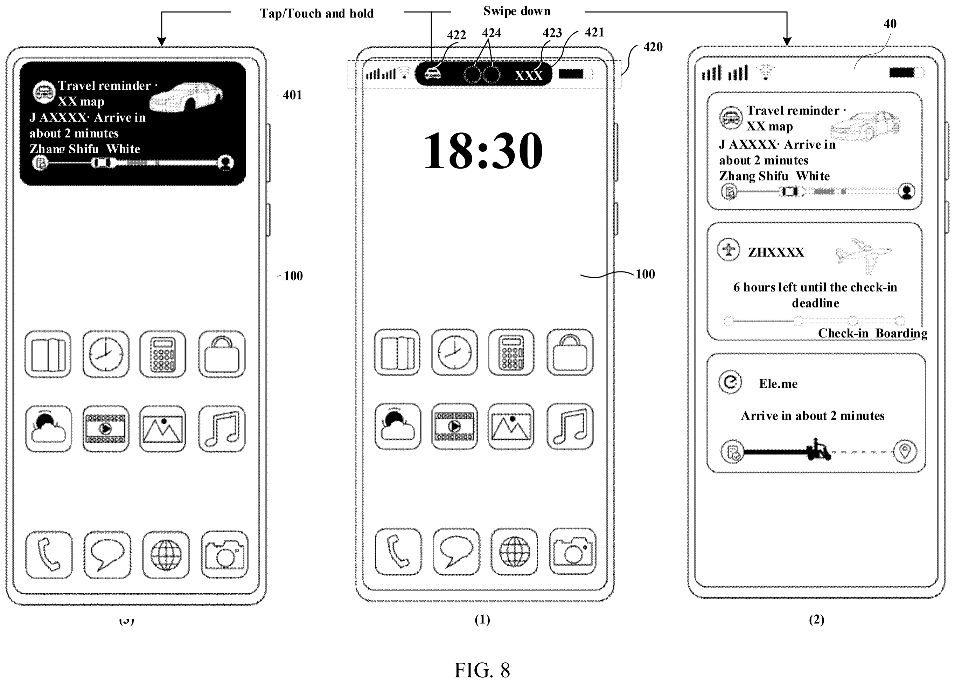

In an example, as shown in (1) in FIG. 8, the current interface is a home screen 100, and a status bar 420 of the home screen 100 includes a status capsule 421. The status capsule 421 is located in a middle region of the state bar, and the status capsule 421 is black and may be integrated with the black front camera hole 424, so as to present a complete status capsule style, thereby reducing an abrupt sense of the front camera hole.

The taxi travel service is still used as an example for description. As shown in (1) in FIG. 8, the first capsule region 422 of the status capsule 421 may display a taxi travel service icon, and the second capsule region 423 may display key status information of the taxi travel service, such as a license plate number of the vehicle that has accepted the order and an estimated time.

Similar to the status capsule 111 in FIG. 1B, the status capsule 421 in this embodiment may also alternately play/switch service status information, that is, the displayed status information may be switched according to different nodes of the service. In addition, status information of a same node displayed in turn includes multiple strings.

Interactive operations of the status capsule 421 in this embodiment are similar to those of the status capsule 111 shown in FIG. 1B, and includes the following interactive operations:

### ① Swipe down on the capsule to enter the notification center

As shown in (1) in FIG. 8, the electronic device displays the notification center interface 40 shown in (2) in FIG. 8 in response to a swipe-down operation on the status capsule 421, that is, swipe down on the status capsule to enter the notification center.

### ② Tap or touch and hold the capsule to expand the capsule into a card

In (1) in FIG. 8, in response to a tap or touch and hold operation on the status capsule 421, the electronic device displays the interface shown in (3) in FIG. 8, that is, the status capsule expands into the card 401, and content displayed on the card 401 is the same as that on the card 130 shown in FIG. 1C. Details are not described herein again.

### ③ Swipe up to make the capsule disappear

The status capsule 421 disappears in response to a swipe-up operation or a tap and swipe-up operation on the status capsule 421. When the status information of the service corresponding to the status capsule is updated, the status capsule is displayed again.

### (2) One capsule is associated with two services, and two service notifications are to be displayed

The capsule in this embodiment includes a first capsule region and a second capsule region on both sides of the front camera, and each capsule region may be associated with one service, that is, one capsule may be associated with two different services at the same time, that is, one capsule may display information about two services at the same time. In this embodiment, a priority of a service associated with the first capsule region is higher than that of a service associated with the second capsule region.

In an example, the two services associated with the capsule are the first two services with the highest priority received. As the service status changes, the priority of the service notification may change. Therefore, the two services associated with the capsule are also dynamically changed, and are not fixed two services, that is, the capsule always displays information about two services with the highest priority.

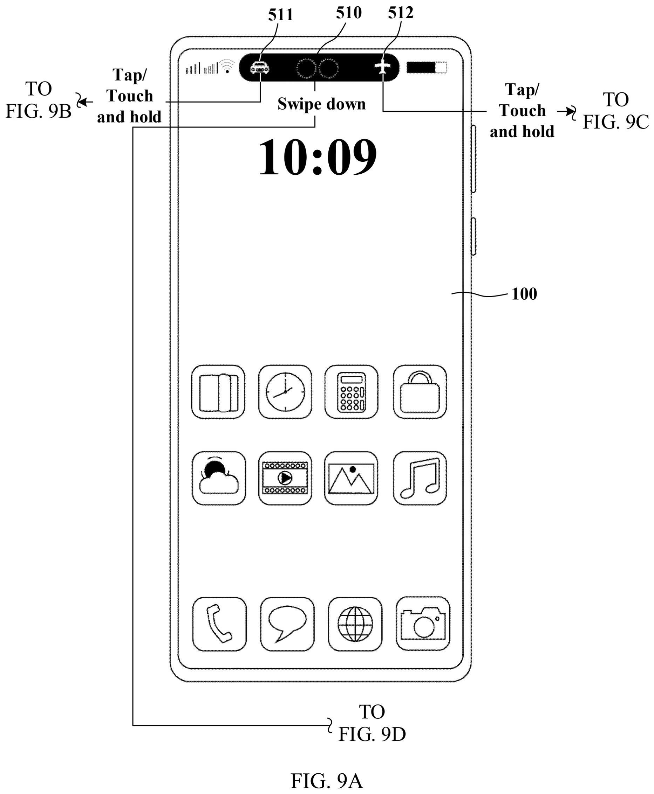

As shown in FIG. 9A, the capsule 510 is located in the front camera area, and the capsule is black. The first capsule region 511 is configured to display an icon of a service, and the second capsule region 512 is configured to display an icon of another service. For example, in this example, an icon of a taxi travel service is displayed on the left side of the capsule 510, and an icon of a flight travel service is displayed on the right side.

In this embodiment, the following interactive operations may be performed on the capsule:

### (1) Tap or touch and hold the capsule to expand the capsule into a card

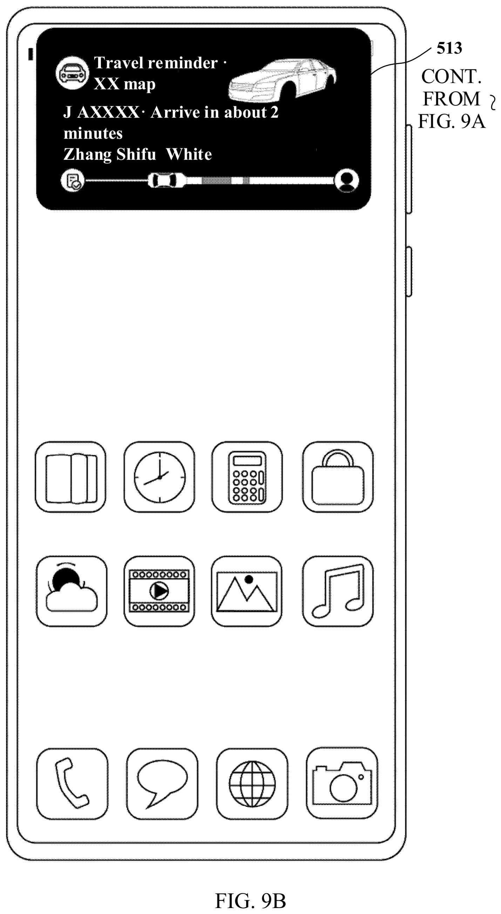

The electronic device jumps to the interface shown in FIG. 9B in response to a tap or touch and hold operation on the first capsule region 511 in the capsule 510 shown in FIG. 9A, that is, the first capsule region 511 expands into the card 513. In this example, the first capsule region 511 is associated with a taxi travel service, and the card 513 of the taxi travel service is displayed after the region is tapped.

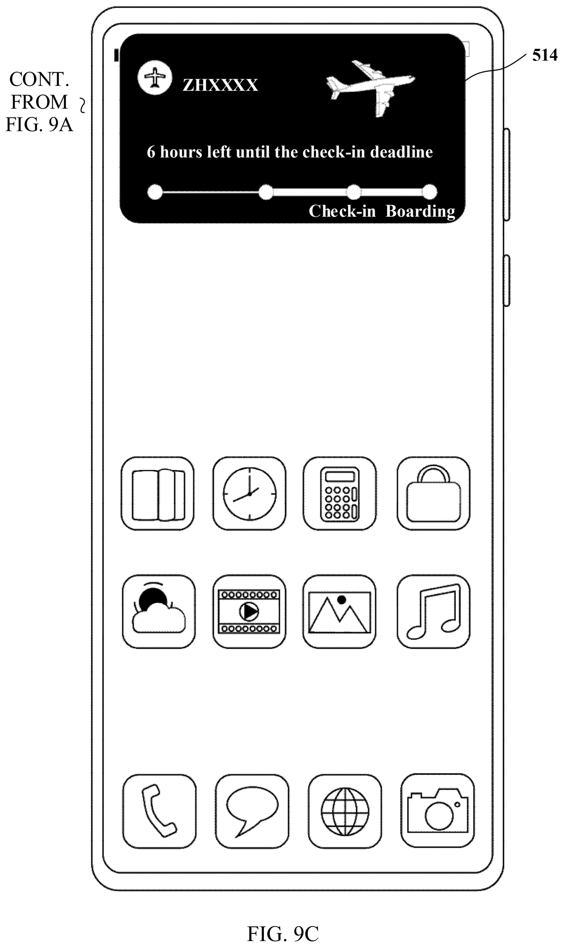

Similarly, in response to a tap or touch and hold operation on the second capsule region 512 in the capsule 510, the electronic device jumps to the interface shown in FIG. 9C, that is, the second capsule region expands into the card 514. For example, in this example, the second capsule region 512 is associated with a flight travel service, and the card 514 of the flight travel service is displayed after the region is tapped.

### ② Swipe down on the capsule to jump to the notification center

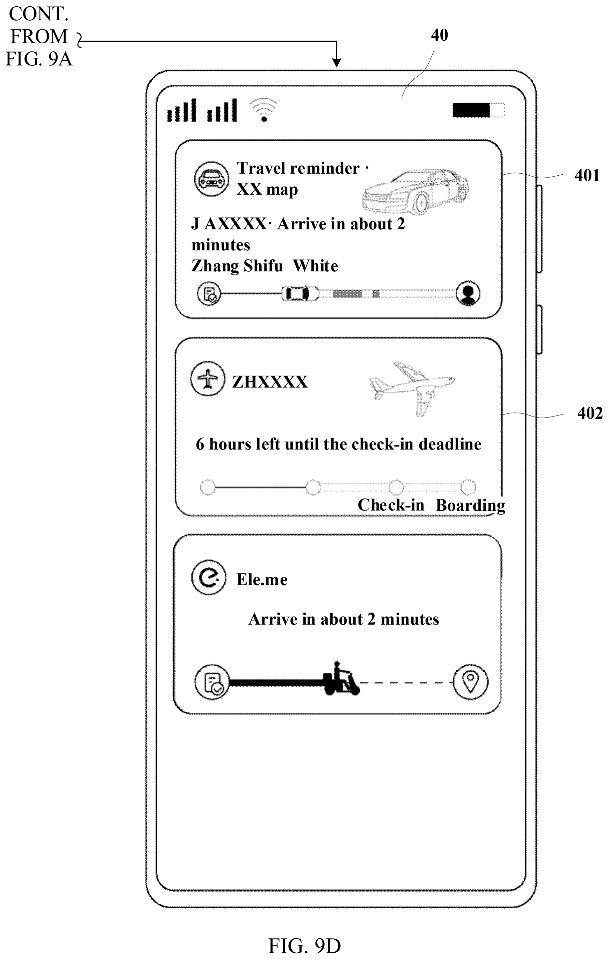

In response to a swipe-down operation on any display region of the capsule 510, the electronic device jumps to the notification center interface 40 shown in FIG. 9D. The first two notification cards (that is, 401 and 402) of the notification center interface 40 are respectively notifications of two services associated with the capsule 510, and the card corresponding to the first capsule region is arranged in front of the card corresponding to the second capsule region.

### ③ Swipe up to make the capsule disappear

The status capsule 510 disappears in response to a swipe-up operation or a tap and swipe-up operation on the status capsule 510. When the status of the service corresponding to the status capsule is updated, the status capsule is displayed again.

It may be learned from the foregoing that, in this embodiment, information about two associated services may be displayed in a same capsule. The user may perform a corresponding operation on the capsule to jump to an interface corresponding to the operation, for example, display all capsules, or enter the notification center. It can be learned that the user may directly operate the capsule to quickly view all important notifications, thereby improving efficiency of viewing multiple important notifications.

### (3) One capsule can be associated with one service and one control switch

In an example embodiment, the first capsule region is associated with a service, and the second capsule region is associated with a control switch. The service associated with the capsule is a currently running service with the highest priority. The associated control switch is a service or an application-recommended control switch that is currently used by the user, and automatically displays the currently running service with the highest priority except the service displayed in the first capsule region or another automatically-recommended control switch after the recommendation of the control switch ends.

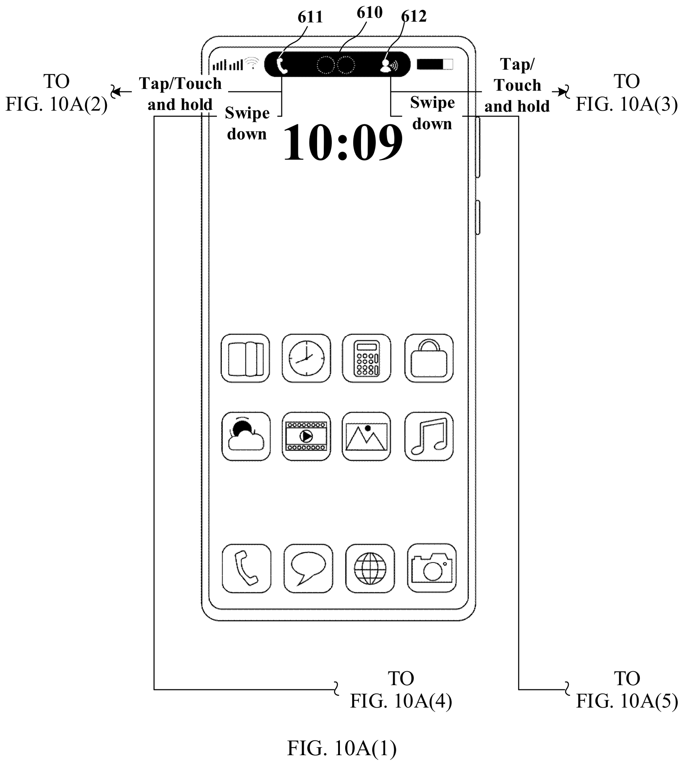

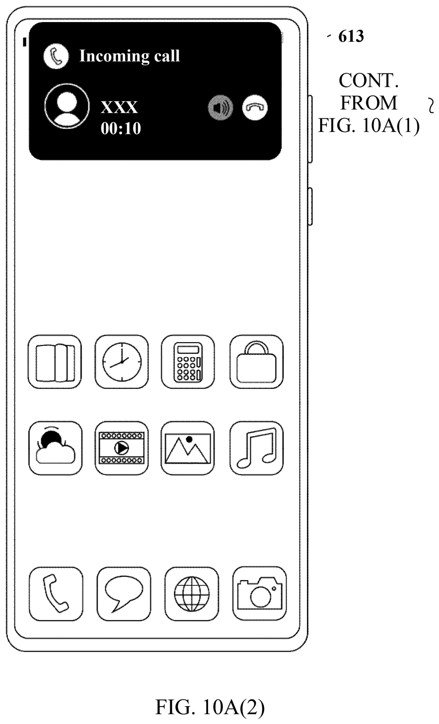

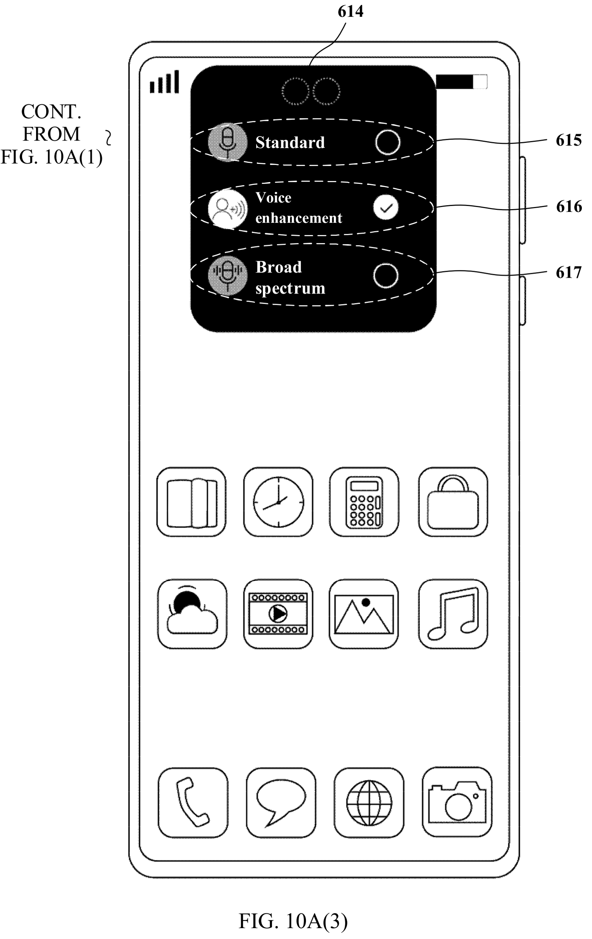

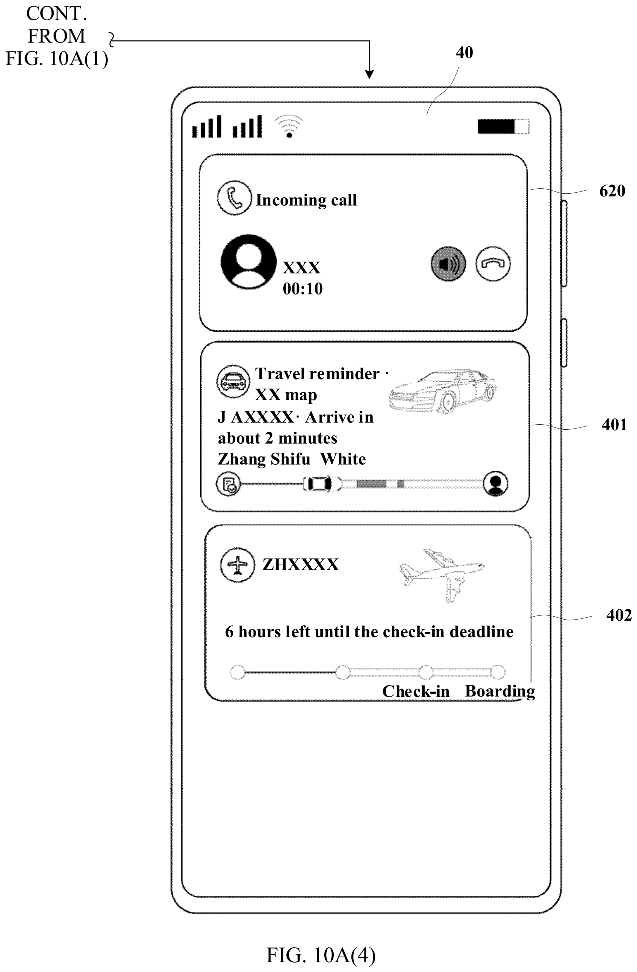

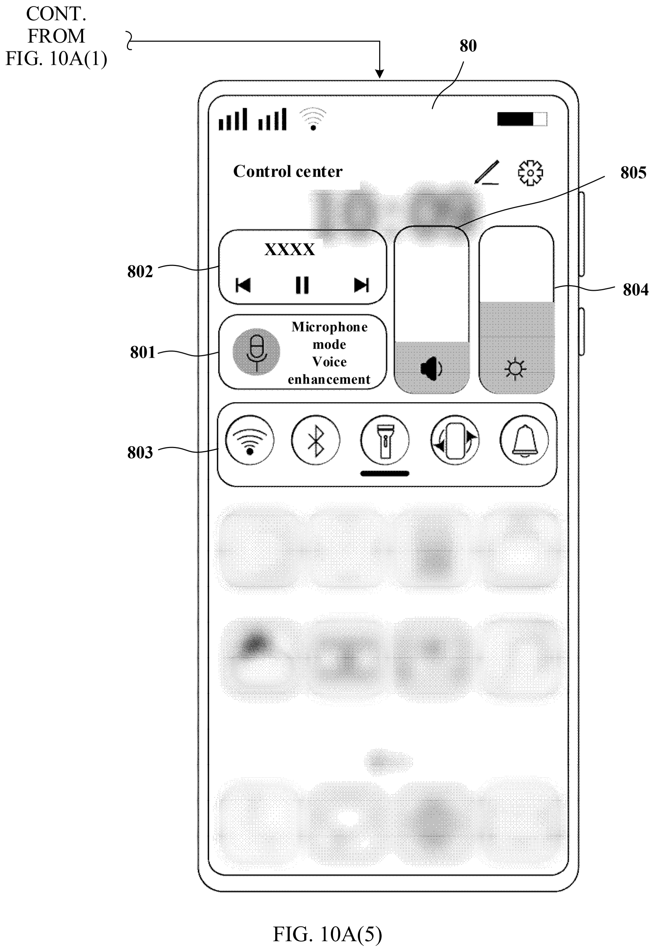

For example, in an example, two services that currently run with the highest priority are a taxi travel service and a flight travel service, and a priority of the taxi travel service is higher than that of the flight travel service. Therefore, the first capsule region displays the taxi travel service, and the second capsule region displays the flight travel service. If the user makes a voice call, the system automatically recommends a voice enhancement service. Because a priority of a voice call service is higher than that of the taxi travel service and that of the flight travel service, as shown in FIG. 10A(1), the first capsule region 611 displays an icon of the voice call service, and the second capsule region 612 displays an icon of a recommended voice enhancement control switch. The user may directly tap this icon to switch an on/off state of the control switch.

In an embodiment, a color of the control switch icon displayed in the second capsule region 612 may be used to indicate an on/off state of the control switch. For example, gray represents an off state and blue represents an on state, or another color may be used to represent the on or off state. This is not limited in this application.

If the user turns on the voice control switch or does not operate within preset duration, and the voice call service and the taxi travel service are not ended, the first capsule region 611 still displays the icon of the voice call service, and the voice enhancement control switch in the second capsule region 612 disappears and is updated to the icon of the taxi travel service. That is, after automatic recommendation of the control switch ends, the second capsule region is updated from the icon of the recommended control switch to a service with a highest priority that is currently running except the service displayed in the first capsule region.

Further, if the voice call service ends, and the taxi travel service and the flight travel service do not end, the first capsule region 611 is updated from the icon of the voice call service to the icon of the taxi travel service, and the second capsule region 612 is updated from the icon of the taxi travel service to the icon of the flight travel service.

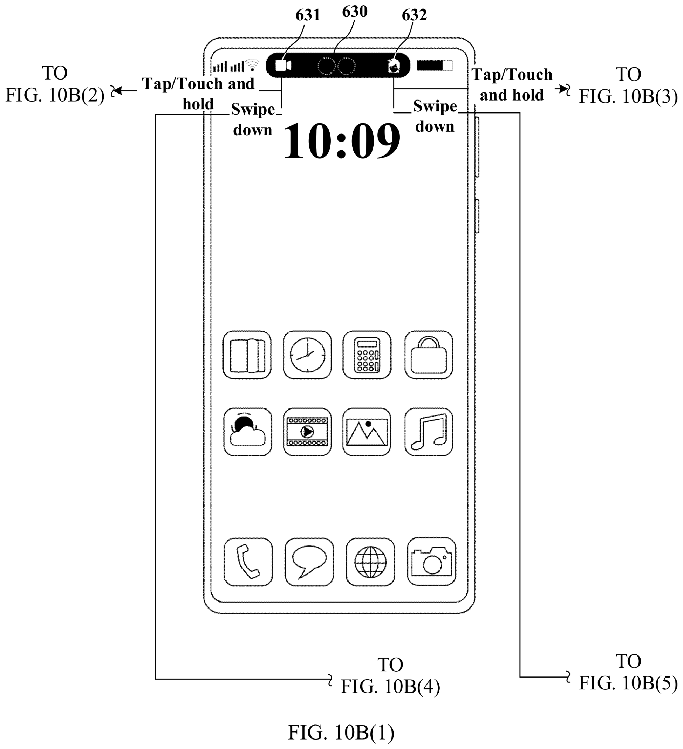

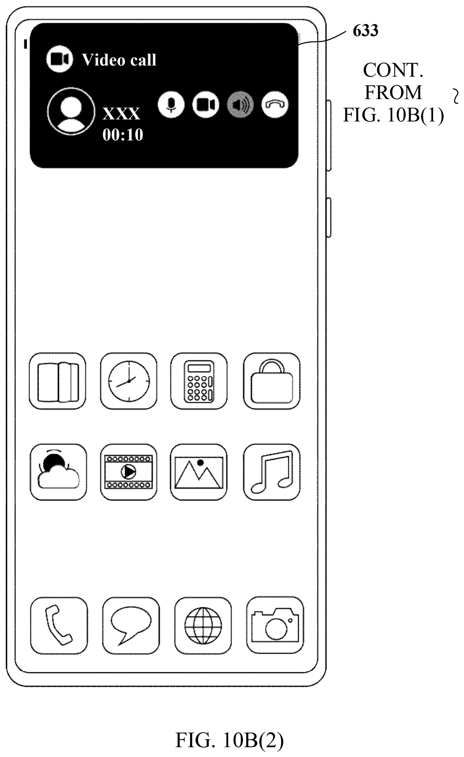

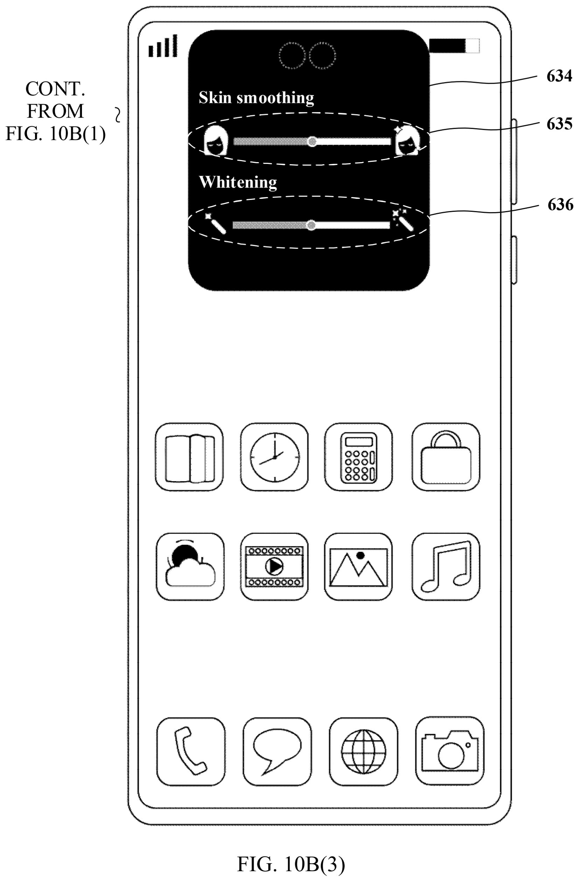

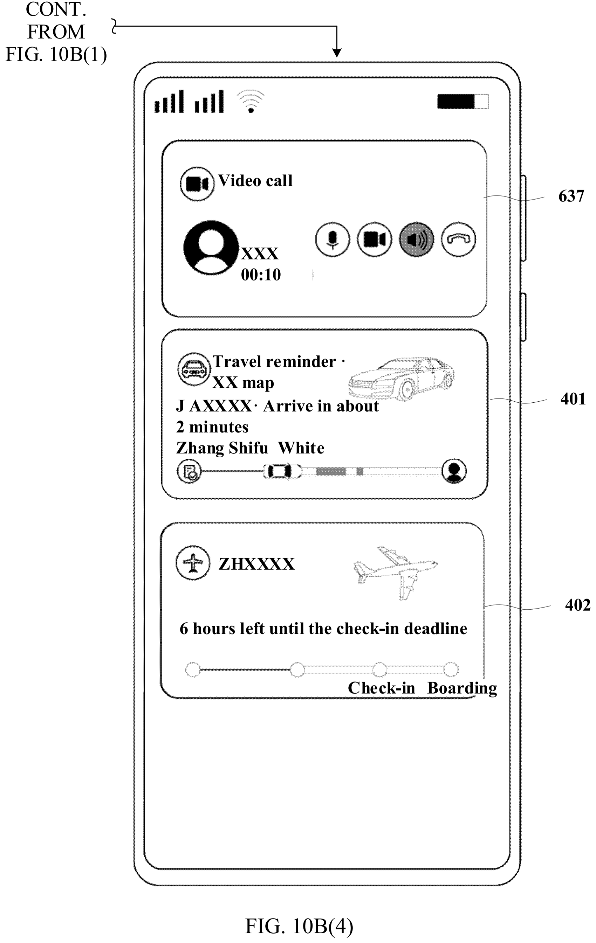

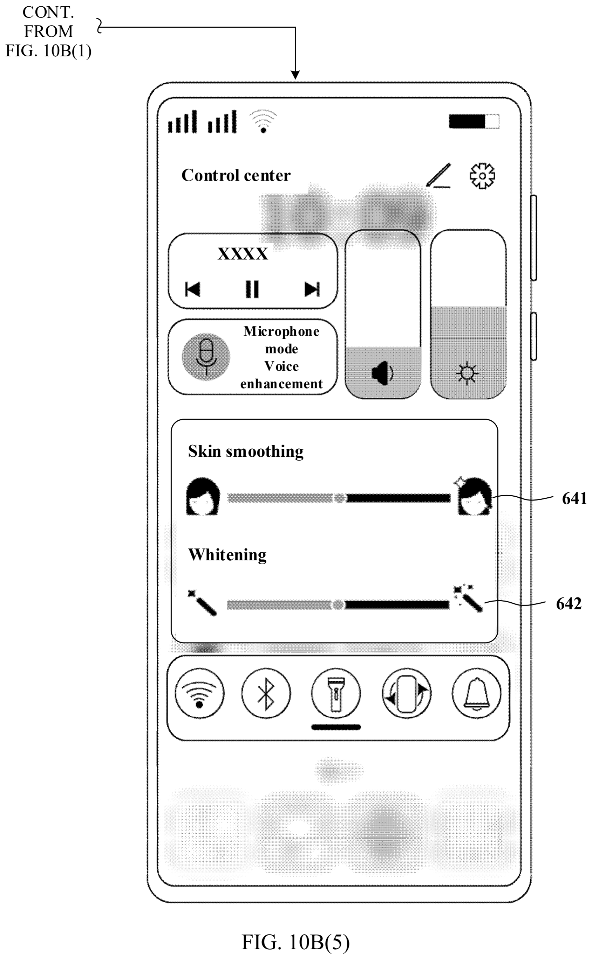

In another example, the first capsule region of the status capsule displays the taxi travel service, and the second capsule region displays the flight travel service. If the user enables a video call (for example, a video call function of a call APP or a video call function of a third-party instant messaging APP) and enters another application interface (for example, a home screen), a beauty service is automatically recommended. In this case, as shown in FIG. 10B(1), the first capsule region 631 is updated to an icon of the video call service, and the second capsule region 632 is updated to an icon of a beauty switch. In this way, the user can directly operate the beauty switch in the second capsule region, and does not need to enter the beauty setting interface layer by layer, thereby reducing operation complexity of adjusting the beauty switch in a video call scenario, and improving operation efficiency.

Certainly, another control switch associated with this scenario may also be automatically recommended according to another application scenario. For example, when it is detected that the electronic device enables a service that requires Bluetooth communication (for example, wireless projection or scan to ride), the Bluetooth switch may be automatically recommended, and an icon of the Bluetooth switch is displayed in the second capsule region. Details are not described herein again.

In this embodiment, the following interactive operations may be performed on the capsule:

### ① Tap or touch and hold the service capsule to expand the service capsule into a card

In response to a tap operation on the first capsule region shown in FIG. 10A(1), the electronic device jumps to the interface shown in FIG. 10A(2), that is, the first capsule region expands into the card 613. The card 613 is located at a top of the screen and a color of the card is black, so that the card 613 may be integrated with the front camera hole, thereby reducing an abrupt sense of the front camera hole.

Content displayed on the card 613 is related to an associated service. A telephone service is used as an example. As shown in FIG. 10A(2), the card 613 may include a name or an image of a current contact, and a control button of the telephone service, such as a speaker or a hang-up button. The user may directly operate the control button on the card without having to open a telephone service interface, thereby improving control efficiency. Similarly, tap or touch and hold the first capsule region 631 shown in FIG. 10B(1) to expand it into a card 633, that is, a video call card. The card may include a name, a picture, and a control button, such as Mute, Camera, Speaker, and Hang-up. The user may directly operate the button on the card. Types and a quantity of control buttons included in the card 633 may be adjusted, which is not limited in this application.

In addition, in response to a swipe-up operation on the card 613, the card 613 shrinks to the capsule 610, that is, the electronic device jumps from the interface shown in FIG. 10A(2) to the interface shown in FIG. 10A(1).

### ② Tap or touch and hold the control capsule to expand the control capsule into a control switch card

In response to a tap or touch and hold operation on the second capsule region 612 of the capsule 610 shown in FIG. 10A(1), the electronic device jumps to an interface shown in FIG. 10A(3), that is, the second capsule expands into a control switch card 614, where the control switch card is located at a top of the screen and is black, and may be integrated with the front camera, thereby reducing an abrupt sense of the front camera hole.

In this example, the control switch card 614 includes control switches such as a standard control switch 615, a voice enhancement control switch 616, and a broadband switch 617. In this way, the user does not need to jump to a sound setting interface, and a corresponding switch is directly controlled to be turned on or turned off by using a control switch card, thereby reducing operations of the user and improving control efficiency.

Similarly, the second capsule region 632 shown in FIG. 10B(1) is tapped or touched and held to jump to the interface shown in FIG. 10B(3), that is, the second capsule region 632 is expanded into the control switch card 634. As shown in FIG. 10B(3), the control switch card 634 includes a skin smoothing adjustment button 635 and a whitening adjustment button 636. The user may directly adjust the two buttons to adjust a beauty degree, thereby improving control efficiency.

In addition, in response to an operation on a switch in the control switch card, the icon displayed in the second capsule region is updated to a switch selected by the user. For example, the user turns on the broadband switch 617 in the card 614, and the second capsule region 612 is correspondingly updated to an icon of the broadband switch. ③ Swipe down on the service capsule to enter the notification center

The electronic device jumps to the interface of the notification center in response to a swipe-down operation on the first capsule region in the capsule. That is, the first capsule region in the capsule is an entrance to the notification center.

In this example, priorities are in ascending order: voice call service (or video call service) > taxi travel service > flight travel service. Therefore, the card 620 of the call service in the example shown in FIG. 10A(4) is in the first place, and the card 637 of the video call service in the example shown in FIG. 10B(4) is in the first place, followed by the taxi travel service and the flight travel service successively.

### ④ Swipe down on the control capsule to enter the control center

The electronic device jumps to the interface of the control center in response to a swipe-down operation on the second capsule region in the capsule. That is, the second capsule region is an entrance to the control center. By using the entrance, the control center may be quickly accessed, thereby reducing user operations and improving a speed and efficiency of entering the control center.

As shown in FIG. 10A(5), the control center includes a plurality of shortcut control switches, such as a control switch card 801 that controls a microphone mode, a card 802 that controls music to play, a volume adjustment button 805, a screen brightness adjustment button 804, and another control switch 803. As shown in FIG. 10B(5), the control center may further include a skin smoothing adjustment switch 641 and a whitening adjustment switch 642.

### ⑤ Swipe up to make the capsule disappear

The electronic device makes the capsule disappear in response to a swipe-up operation or a tap and swipe-up operation on the capsule. When the service status information corresponding to the capsule is updated or the recommended control switch changes, the capsule is displayed in the status bar again.

In conclusion, it may be learned that, in this embodiment, information about a service and a control switch may be displayed in a same capsule, that is, a capsule is divided into a service capsule and a control capsule. The user may separately perform a corresponding operation on the service capsule or the control capsule to jump to an interface corresponding to the operation. For example, the user does not need to access the notification center to view a corresponding notification, or the user can operate the control capsule to turn on or off a corresponding control switch without a need to access the control center to control the switch. Therefore, operations of the user are reduced, and efficiency of viewing the notification or controlling an on-off state is improved.

### (4) One capsule is associated with two services, and multiple service notifications are to be displayed

In this embodiment, similar to the embodiment shown in FIG. 9A to FIG. 9D, a capsule may display notification information of two services. When a left/right part of the capsule is tapped or touched and held, the part of the capsule is expanded into a card, and another capsule is displayed below the card.

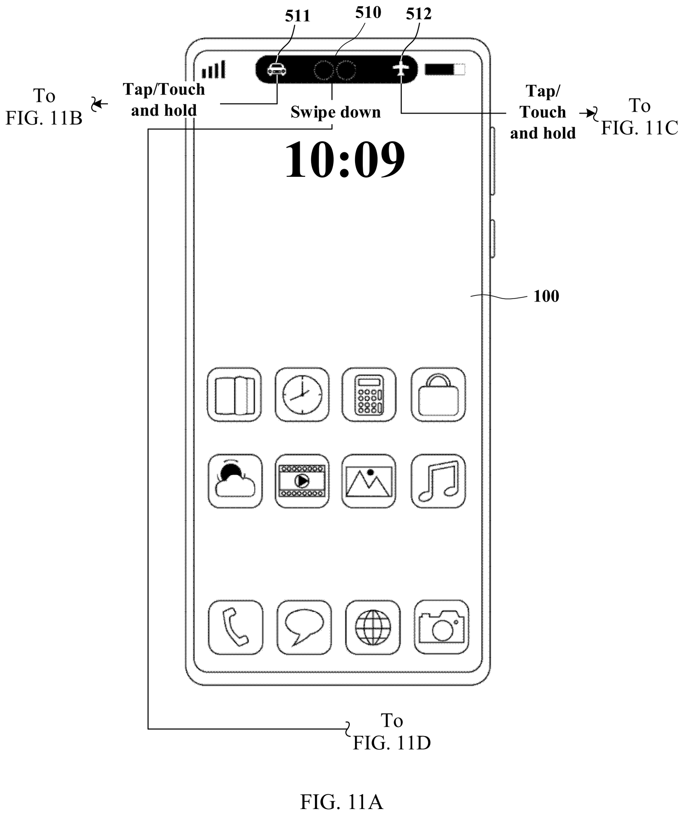

In this example, as shown in FIG. 11A, a region on the left side of the front camera hole in the capsule 51 is associated with a taxi travel service, and an icon 511 of the service is displayed. A region on the right side of the front camera hole in the capsule 51 is associated with a flight travel service, and an icon 512 of the service is displayed.

### ① Tap or touch and hold the capsule to expand the capsule into a card and display another capsule

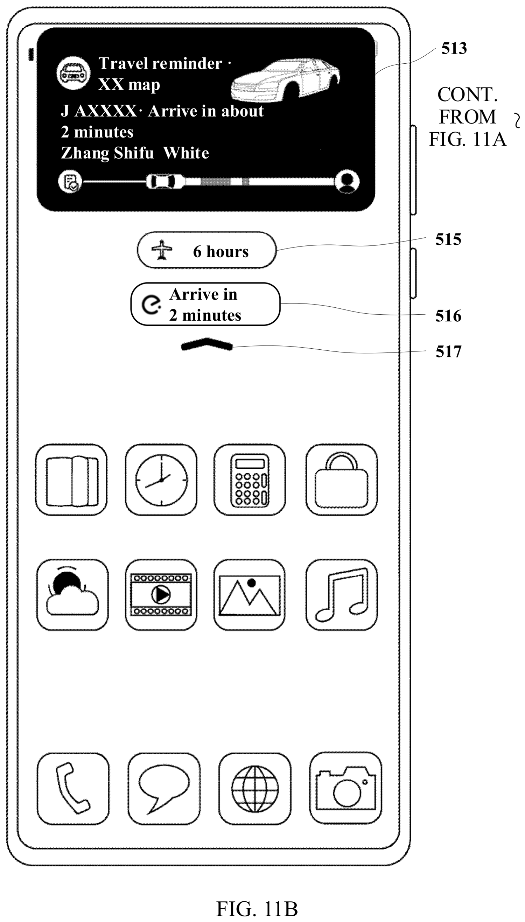

The electronic device jumps to the interface shown in FIG. 11B in response to a tap or touch and hold operation on the first capsule region in the capsule shown in FIG. 11A, that is, the left part of the capsule expands into the card 513 of the taxi travel service, and the card is located at the top of the screen. A card color of the card 513 is black, so that the card can be integrated with the front camera hole.

Complete capsules of other services are sequentially displayed below the card 513, and a complete capsule (that is, capsule 515) corresponding to the service associated with the right part of the capsule 510 is placed at the top of the plurality of capsules, that is, the capsule 515 is placed below the card 513 and above the capsule 516.

Capsules (e.g., capsule 516 of the food delivery service) of other services that are not associated with the capsule 510 are arranged in order of notification receiving time from early to late. Below the other capsules, there is also a folding identifier 517.

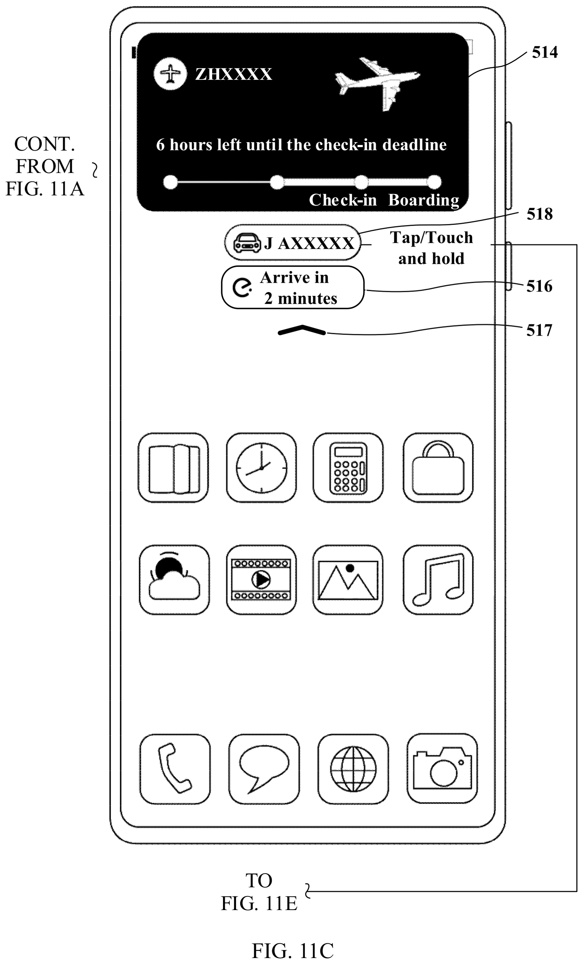

Similarly, the electronic device jumps to the interface shown in FIG. 11C in response to a tap or touch and hold operation on the second capsule region in the capsule shown in FIG. 11A, that is, the right part of the capsule expands into the card 514. The notifications of other services are arranged below the card 514 in complete capsule forms, and the complete capsule (that is, the capsule 518) corresponding to the service associated with the left part of the capsule 510 is located below the card 514 and above other complete capsules.

It can be learned that after the capsule 510 is tapped or touched and held, the operated part of the capsule is expanded into a card form, and other service capsules are sequentially displayed below the card. In addition, the complete capsule that is in the capsule 510 and that is corresponding to the unoperated part of the capsule is arranged below the card and above the other capsules.

### (2) Swipe down on the capsule to jump to the notification center

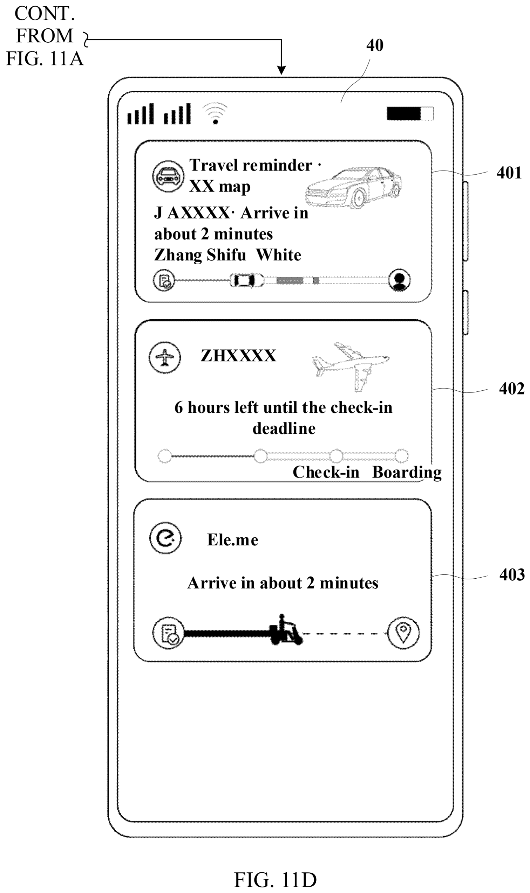

An interaction effect of the swipe-down operation on the capsule 510 is the same as that in the embodiment shown in FIG. 8, that is, swipe down on the capsule 510 to jump to the interface of the notification center shown in FIG. 11D. Details are not described herein again.

### ③ Tap or touch and hold the capsule below the card to expand the capsule into a card

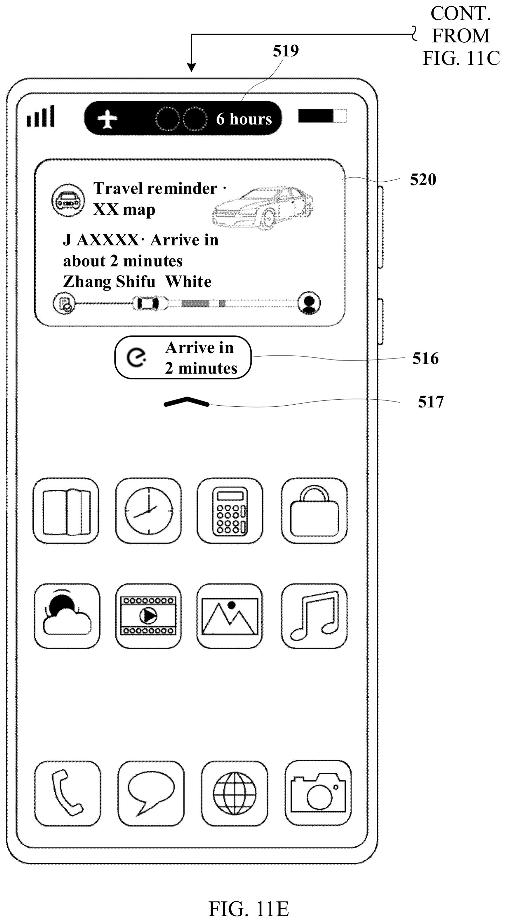

For example, the capsule 518 shown in FIG. 11C is tapped or touched and held to jump to the interface shown in FIG. 11E, the card 514 shrinks to the capsule 519, the capsule 518 expands into the card 520, and the capsule 516 is displayed below the card 520.

As shown in FIG. 11E, a service icon is displayed in the first capsule region of the capsule 519, and the service status information is displayed in the second capsule region. In addition, the capsule 519 is located in the middle of the top of the screen, and is black so as to be integrated with the front camera hole.

In an embodiment, the folding identifier 517 may also be displayed below the capsule 516.

### (4) Swipe up on the card to shrink the card to a capsule

In response to a swipe-up operation on the card and the capsule display region shown in FIG. 11B, FIG. 11C, or FIG. 11E, the electronic device shrinks the card into a capsule, and hides a capsule corresponding to a service that is not associated with the capsule 510, that is, jumps to the interface shown in FIG. 11A.

In addition, the capsule 510 shown in FIG. 11A disappears in response to the swipe-up operation or the tap and swipe-up operation on the capsule 510. When the service status information corresponding to the capsule is updated or the recommended control switch changes, the capsule is displayed in the status bar again.

In conclusion, according to the notification display method provided in this embodiment, the capsule displayed in the status bar is located near the front camera hole on the screen. In addition, the capsule is black and is integrated with the front camera hole, that is, the front camera hole and the capsule are integrated to present a complete capsule style, thereby reducing an abrupt sense brought by the front camera hole.

Further, when there are two service notifications that need to be displayed, information about the two service notifications, such as service icons, may be displayed in the two display regions on the left and right sides of the capsule respectively, so that the user knows, by using the service icon displayed in the capsule, a service status running in the background. In addition, specific status information of a background running service may be obtained through an operation performed on the capsule, such as tap or swipe down, thereby improving efficiency of obtaining important notification by the user.

### 2. Combination of multiple capsules and the front camera hole

### (1) Manner 1 for combining multiple capsules and the front camera hole

In this embodiment, in a case in which multiple status capsules exist, the state bar displays only the status capsules in the first place. To indicate that another status capsule exists, an expand identifier may be displayed below the status capsule. Swipe down on the status capsule or expand identifier to expand and display other status capsules after the first position. This solution is similar to the multi-capsule display manner shown in FIG. 6A to FIG. 6E, and a difference lies in that colors of a capsule and a card in this embodiment are black.

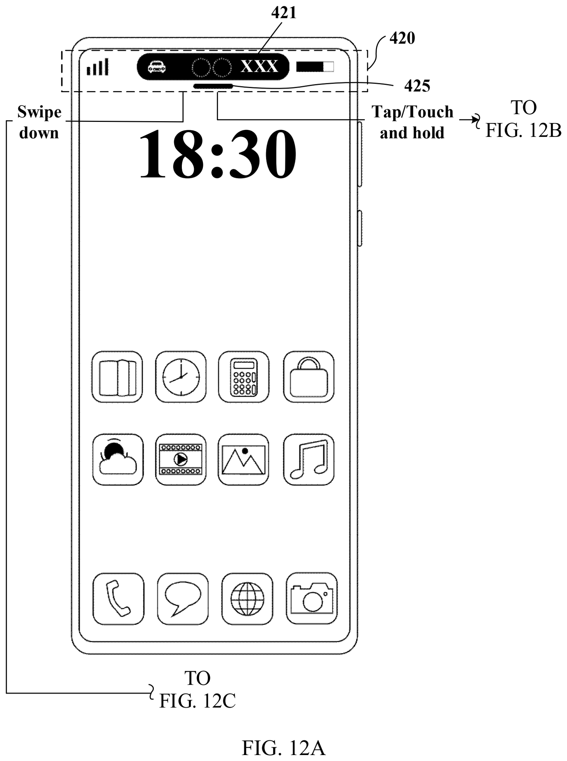

As shown in FIG. 12A, the status bar 420 includes a status capsule 421, and the status capsule 421 is integrated with the front camera hole to present a complete status capsule style. There is an expand identifier 425 below the status capsule 421.

In this embodiment, the following interactive operation may be performed on the status capsule:

### ① Tap/Touch and hold the capsule at the top layer to expand the capsule into a card, and display other status capsules

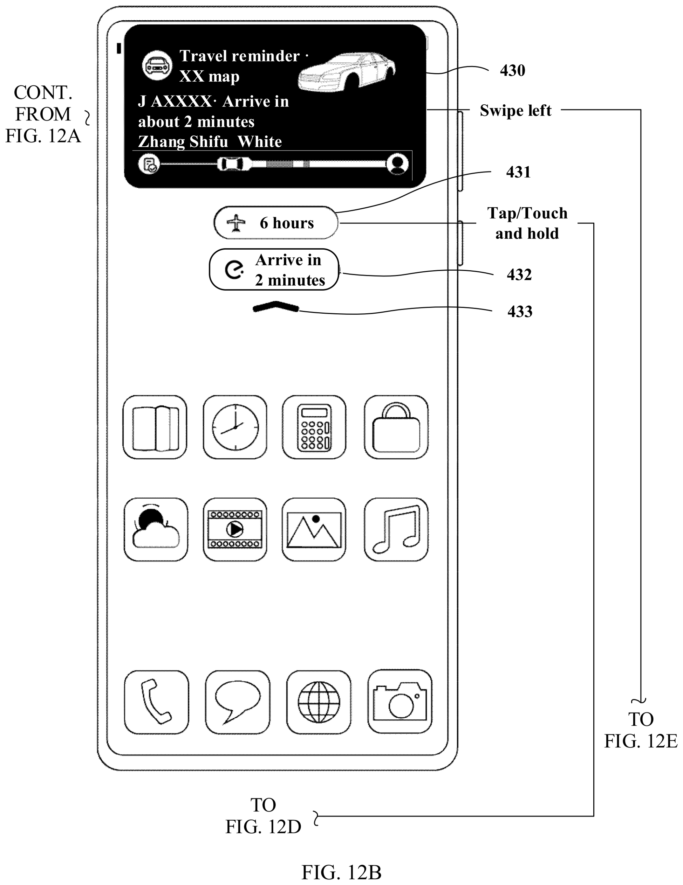

In response to a tap or touch and hold operation on the status capsule 421, the electronic device jumps to the interface shown in FIG. 12B, that is, the status capsule 421 expands into the card 430. At the same time, other status capsules are displayed below the card 430, such as the status capsule 431 for flight travel and the status notification 432 for information in this example. For example, the folding identifier 433 may also be displayed below the other status capsules.

In this embodiment, the card 430 is black, and is integrated with the front camera hole. In this way, the front camera hole and the card 430 are integrated, thereby eliminating an abrupt sense of the front camera hole.

### ② Swipe down on the capsule to enter the notification center

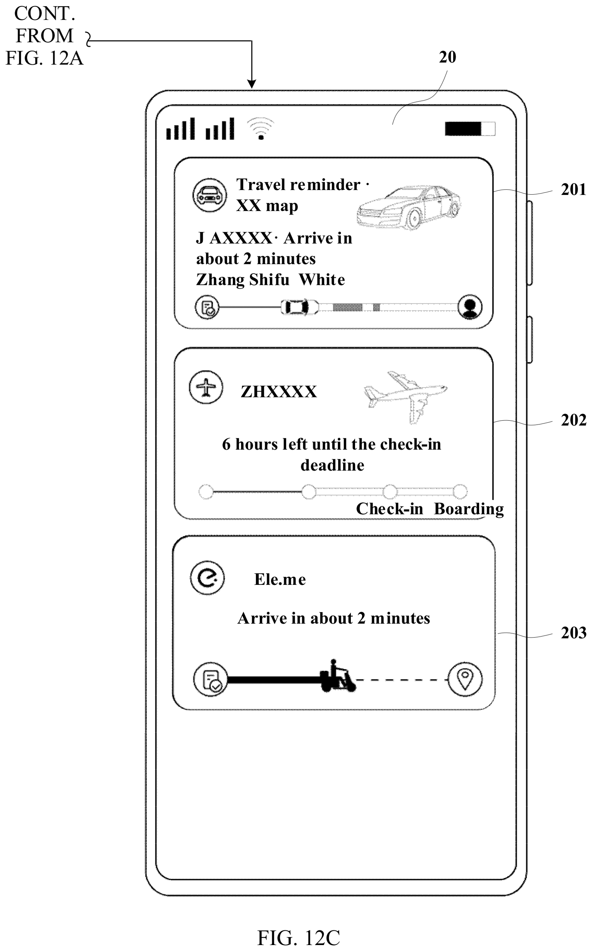

In response to a swipe-down operation on the capsule 421, the electronic device jumps to the interface shown in FIG. 12C, that is, the notification center. The notification center includes cards of all services or applications. An arrangement sequence of the cards is the same as that of the capsules. Content of the cards is the same as that in FIG. 6D, and details are not described herein again.

### ③ Tap/Touch and hold another capsule to expand the capsule into a card, and the current card shrinks to the capsule

A display effect of this process is the same as that of the corresponding operation in FIG. 6A to FIG. 6E. A difference lies in that the card 430 is contracted to the status capsule 421, and a color of the card 430 is blended with a front camera hole.

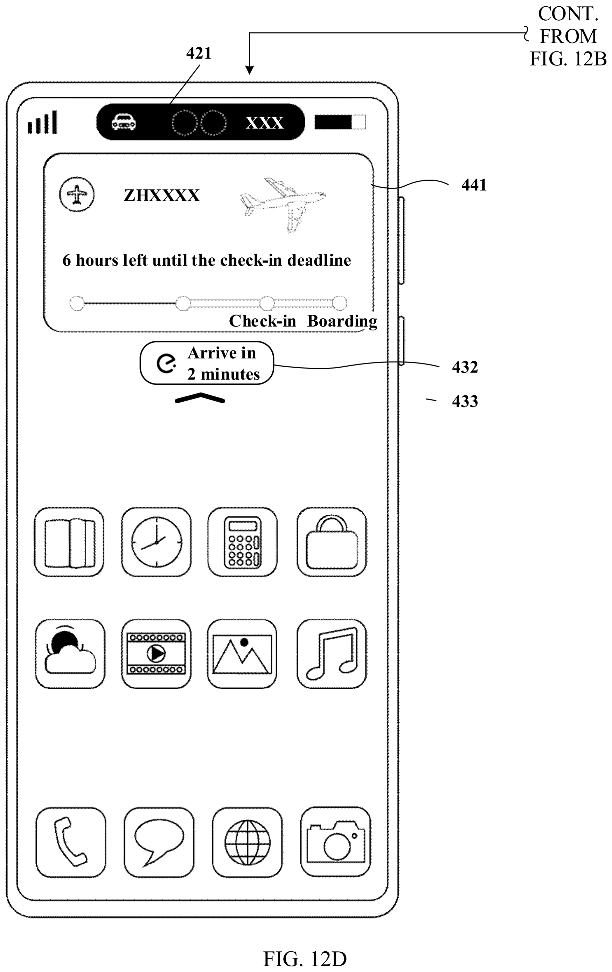

As shown in FIG. 12B, in response to a tap or touch and hold operation on the status capsule 431, the tapped status capsule expands into the card 441 shown in FIG. 12D. At the same time, the card 430 shrinks to a status capsule 421, and the status capsule 421 is located above the card 441. The status capsule 432 and the folding identifier 433 are located below the card 441. That is, the status capsule is tapped to expand the capsule into a card, and sorting of the card is not changed, that is, sorting of the card corresponding to the status capsule is the same as sorting of the status capsule.

In addition, the card 441 is located below the front camera hole, and does not need to cover the front camera hole. Therefore, a card color of the card 441 may not be black. For example, a color of the card 441 may be the same as an interface color of a service corresponding to the card. For example, the card displays a notification of a taxi travel service, and a color of the card is the same as an interface color of a map APP in which the taxi travel service is located.

### ④ Swipe left to remove the card, and the lower capsule moves upward for replacement and expands into a card

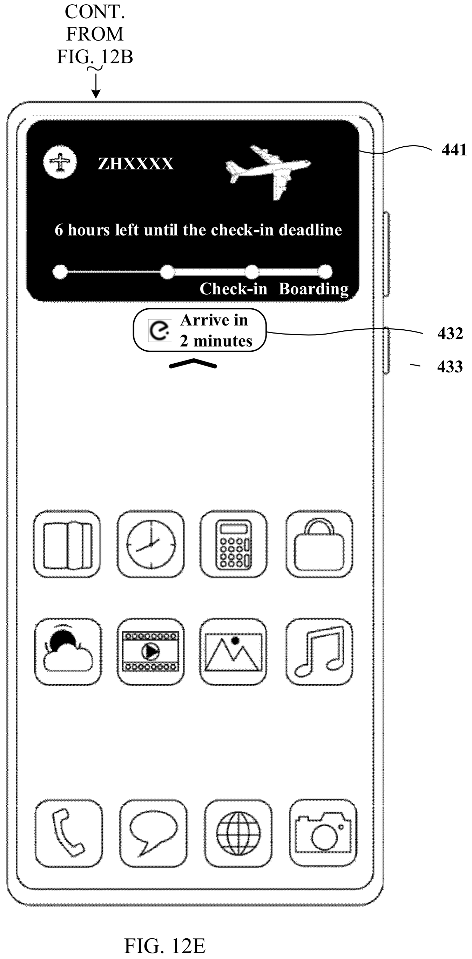

This process is similar to the effect of removing a card in FIG. 6A to FIG. 6E. A difference lies in that, as shown in FIG. 12E, an expanded card is black, and may be integrated with the front camera hole.

### ⑤ Swipe up on the card to shrink the card to a capsule

In response to a swipe-up operation on the status capsule display region of the interface shown in FIG. 12B or FIG. 12D, the electronic device shrinks the card to the status capsule and hides another status capsule, that is, jumps to the interface shown in FIG. 12A.

In addition, the status capsule 421 and the expand identifier 425 disappear in response to a swipe-up operation or a tap and swipe-up operation on the status capsule 421 shown in FIG. 12A.

### (2) Manner 2 of combining multiple capsules and the front camera hole

Similar to the multi-capsule display manner shown in FIG. 7A to FIG. 7D, in this embodiment, the status bar includes a capsule display region 450, where the capsule display region 450 is configured to display at least two status capsules partially overlapping in a horizontal direction, and the status capsule at the top layer is integrated with a front camera hole. A swipe left or right operation on the status capsule can implement left and right switching of the status capsule.

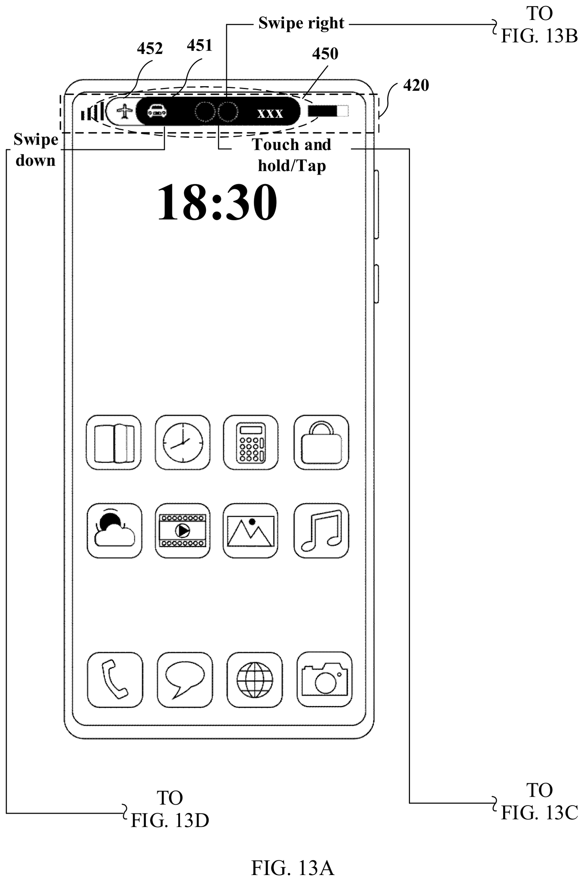

In an example, as shown in FIG. 13A, the status bar 420 includes two status capsules 451 and 452 partially overlapping in a horizontal direction.

The status capsule 451 is located on an upper layer of the status capsule 452, and the status capsule 451 is located on both sides of the front camera hole, and the status capsule is black, and is integrated with the front camera hole to present a complete capsule.

In one example, the status capsule 452 is located on the lower layer of the status capsule 451, and the color of the status capsule 452 may not be black, for example, may be the same color as the application interface color of the associated service.

In this embodiment, an interactive operation on the capsule is the same as that in the embodiment shown in FIG. 7A to FIG. 7D. A difference lies in that in a scenario in which the capsule is displayed, the status capsule of the top layer is black.

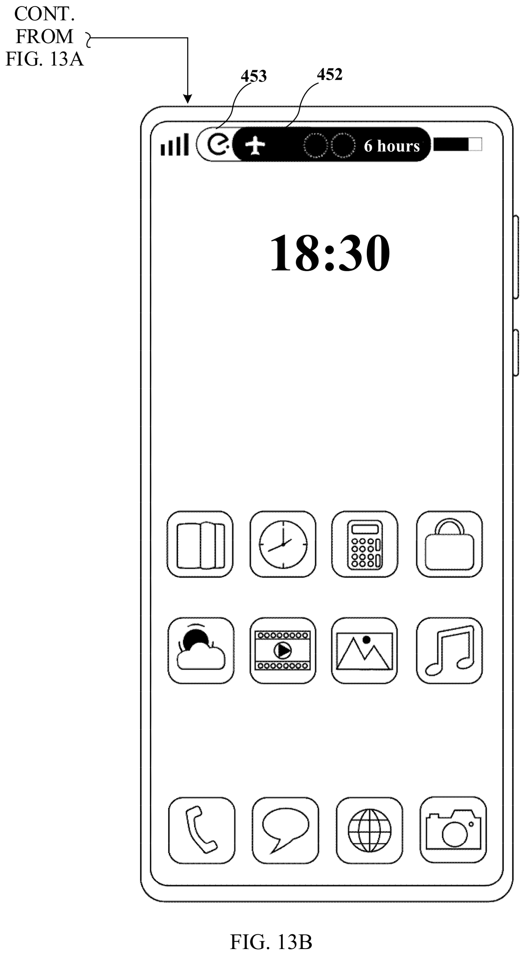

In response to a swipe-right operation on the status capsule 451, the electronic device jumps to the interface shown in FIG. 13B, that is, the status capsule 451 disappears, the status capsule 452 is displayed at the top layer, and a color of the status capsule 452 is changed to black, that is, the status capsule 452 becomes the capsule displayed at the top layer. At the same time, the status capsule 453 arranged behind the status capsule 452 is presented on the lower layer of the status capsule 452, that is, finally, the effect of partially overlapping the status capsule 452 with the status capsule 453 in a horizontal direction is presented. In addition, the color of the status capsule 453 at the bottom layer is the same as the color of the application interface of the service associated with the capsule.

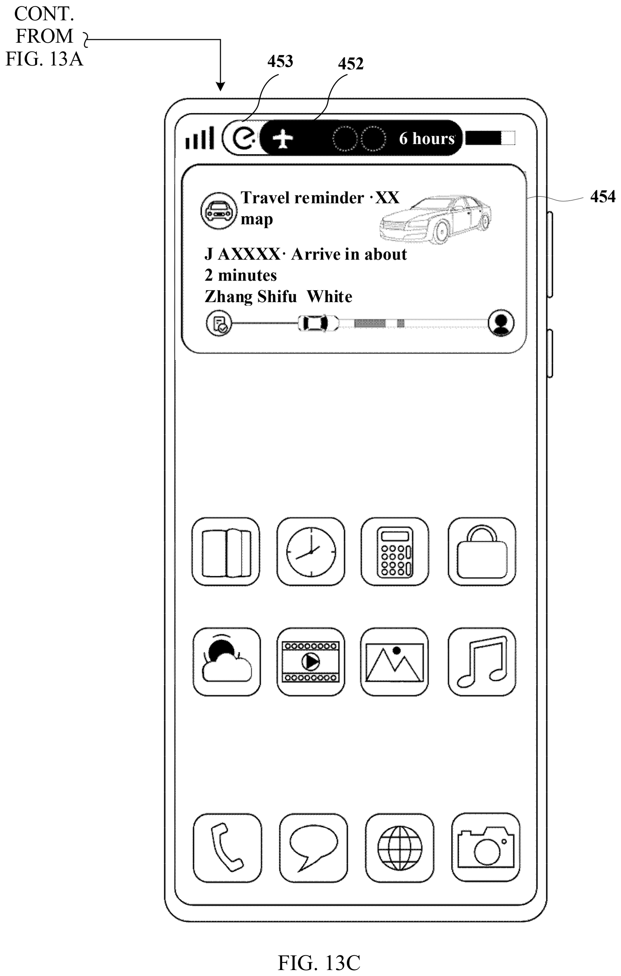

Tap or touch and hold the status capsule 451 to jump to the interface shown in FIG. 13C. The status capsule 451 expands to a card 454, and is located below the state bar. Another capsule after the status capsule 451 is sequentially displayed in the state bar, that is, the top layer displays the status capsule 452, the next layer is the status capsule 453, and the status capsule 452 is black.

Swipe up on the card to shrink the card to a capsule. For example, in this example, the electronic device returns to the interface shown in FIG. 13A in response to the swipe-up operation on the card 454 shown in FIG. 13C, that is, the card 454 shrinks to the status capsule 450, and a service corresponding to the status capsule at the lower layer of the status capsule 450 is updated to a service next to the taxi travel service, such as the flight travel service.

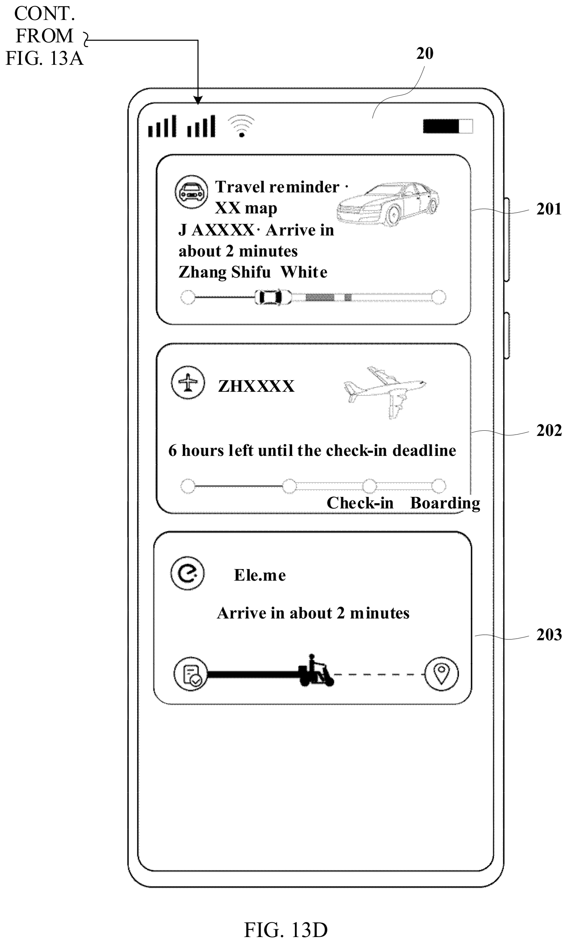

Swipe down on the status capsule 451 to jump to the interface shown in FIG. 13D, that is, the notification center, and a sequence of the cards in the notification center is the same as that of the status capsules.

In addition, the electronic device makes the status capsule disappear in response to a swipe-up operation or a tap and swipe-up operation on the status capsule at the top layer, and the status capsule is displayed again until a status of the service corresponding to the status capsule is updated.

In conclusion, in a scenario in which the capsule is combined with the front camera hole and the capsule needs to be displayed, information about the multiple capsules may be displayed in the status bar, and corresponding operations may be performed on the capsules in the status bar to view all the capsule notifications. In this way, information about all the important notifications can be learned clearly, and the notification center does not need to search for the important notifications one by one, thereby improving efficiency of viewing the multiple important notifications.

### V. Notification display of other display scenes

### 1. Always on Display (Always on Display, AOD) service capsule

For example, the electronic device may enter a screen-off state within preset duration after displaying an interface (for example, an interface of an application), thereby saving power; or the electronic device enters a screen-off state after receiving an operation performed by a user on a power button after displaying an interface.

In the off-screen state, the screen of the electronic device is closed. To enable the user to learn information such as time at any time, some information such as time and weather information may be constantly displayed on the screen after the screen is normally closed, that is, the Always on Display function.

In this embodiment of this application, to enable the user to quickly learn important service notification information in the off-screen state, an AOD card of an important notification may be displayed in the off-screen state. In this way, the user may learn a type and a state of a current service from the AOD card without unlocking.

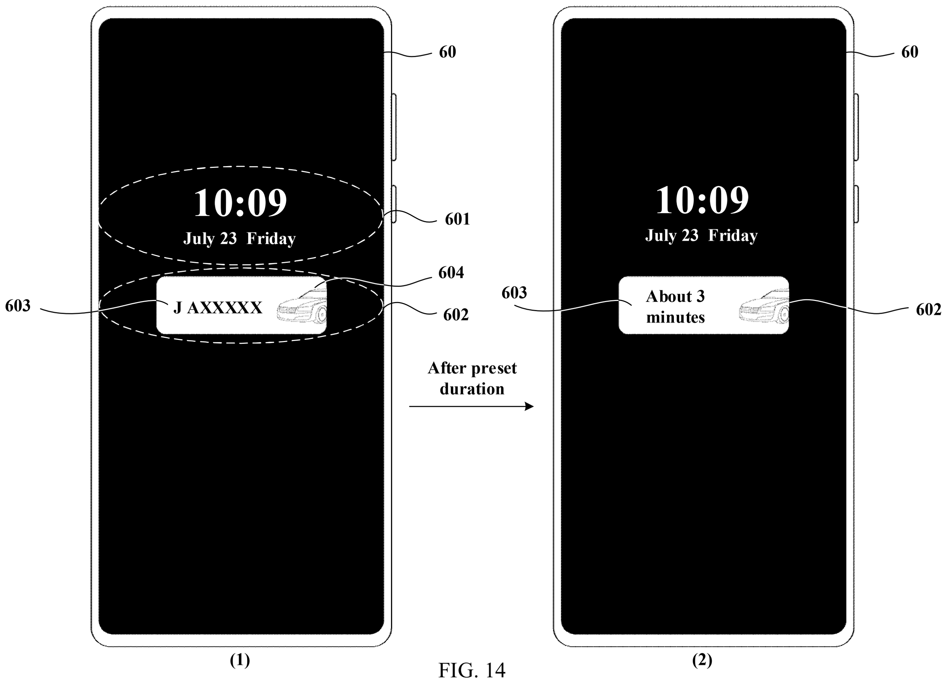

As shown in (1) in FIG. 14, the display screen 60 of the electronic device is in a screen-off state, and the time information 601 and the AOD card 602 are constantly highlighted on the display screen 60.

In this example, the AOD card 602 is located below the time information 601. Certainly, the AOD card 602 may be located anywhere on the screen that does not overlap the time information 601, and a display location of the AOD card is not limited in this application.

The AOD card 602 includes a service icon 604 and a region 603 used to display node information. Similar to a status capsule, if a string included in the key information cannot be displayed in the region 603 at the same time, the key information may be divided into at least two strings and each string is displayed in turn within the capsule.

For example, the taxi travel service is still used as an example. The service is currently in a stage in which a driver has accepted the order and is going to the pick-up point. As shown in (1) in FIG. 14, a region 603 displays key information of the vehicle that has accepted the order, such as a license plate number "J AXXXX", and switches to an interface shown in (2) in FIG. 14 after preset duration (such as 2.5s), that is, the region 603 displays an expected time at which the vehicle that has accepted the order arrives at the pick-up point, for example, about 3 minutes. Key information of a same state is displayed in turn on the AOD card. This process is the same as the manner of alternately playing the status capsules shown in FIG. 2. Details are not described herein again.

In addition, the service status information displayed on the AOD card may be refreshed in real time according to a service status change, that is, when a node in which the service is located changes, key information displayed on the AOD card also changes to status information corresponding to the node. That is, the AOD card corresponding to the same service performs information switching according to different status information of different important nodes. This process is the same as a process in which the status capsule and the card refresh service status information. Details are not described herein again.

Still taking the taxi travel service as an example, key information displayed on different important nodes on the AOD card is the same as information displayed on different nodes on the status capsule shown in FIG. 2. Details are not described herein again.

In addition, after the service end state stays for preset duration, no operation or information update is performed, and the AOD card automatically disappears. For example, the taxi travel service is still used as an example. After the trip ends, the AOD card automatically disappears after maintaining in the Travel End state for 5 minutes.

### 2. Home screen card

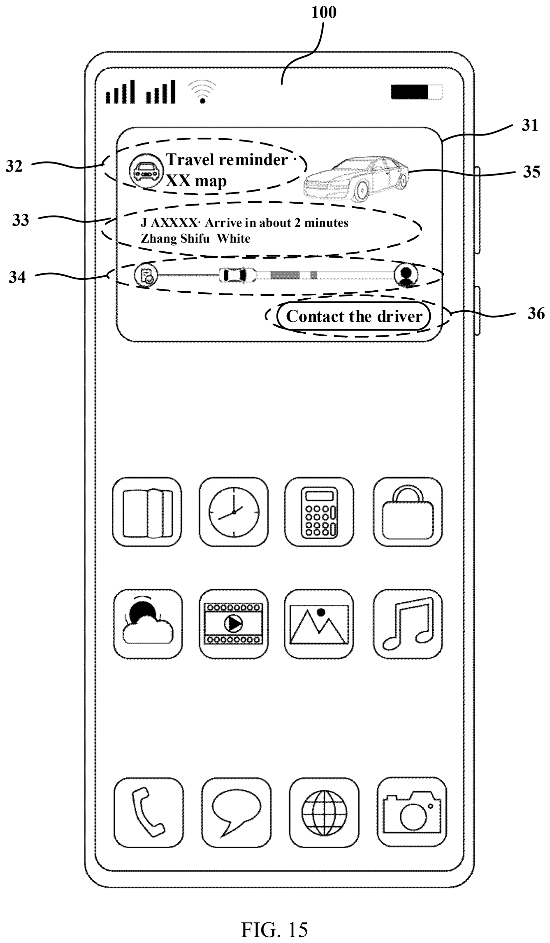

In an embodiment, the home screen interface further includes a card corresponding to a service, which may be referred to as a home screen card of the service. Still, a taxi travel service is used as an example. As shown in FIG. 15, The user initiates a taxi travel service and returns to the home screen 100. A taxi travel card 31 is created and displayed on the home screen 100. The card 31 is used to display notification information related to the current taxi trip.

As shown in FIG. 15, the taxi travel card 31 includes a title area 32, an information area 33, a service status area 34, a service icon 35, and an interaction button 36. Content displayed in the information area 33 and the service status area 34 is updated according to a service status refresh. Content displayed in each region is the same as that in a corresponding region in the card 130 shown in FIG. 1C, and details are not described herein again.

After receiving the operation on the interactive button 36, the electronic device calls the driver of the vehicle that has accepted the order, that is, dials a number of the driver.

### VI. Control switch for each notification display scene

Important notifications (for example, notifications that need timely processing by the user, such as taxi travel, flight travel, food delivery, express delivery, and subway travel) can be displayed in the screen-off display screen, lock screen, status bar, notification center, and home screen card scenarios, so that the user can learn important notification information in time in the above display scenes. In an example, a control switch corresponding to the service in each notification display scene is turned on by default.

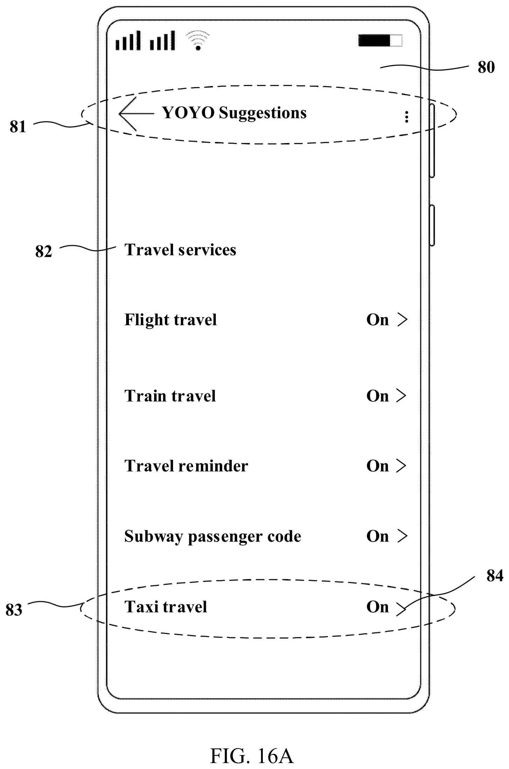

In an example, an interface of the Settings APP includes multiple setting items, such as Smart Assistant. After receiving a tap operation on Smart Assistant, the electronic device displays an interface that includes a YOYO Suggestions setting item. After an operation on the YOYO Suggestions setting item is received, a YOYO Suggestions setting detail interface is displayed, for example, an interface 80 shown in FIG. 16A.

The interface includes setting items for choosing whether to enable services of the YOYO Suggestions function. The YOYO Suggestions function can recommend a currently required APP or service according to the scenario and usage habit.

As shown in FIG. 16A, the interface 80 may set an item title 81, and each setting item type title and setting item. For example, the setting item type title may include multiple types such as a travel service 82 and a life service.

For example, the travel service may include multiple setting items such as Flight travel, Train travel, Travel reminder, Subway passenger code, and Taxi travel 83. Each service setting item includes a service name and a control button, for example, the taxi travel setting item includes a control button 84.

In an example, as shown in FIG. 16A, the control button 84 includes a button status and an operable part. For example, the button status may include "On" and "Off', and the operable part may be ">". After the electronic device receives the tap operation on the operable part, the electronic device switches the state of the control button. For example, the initial state of the control button is "enabled". After the electronic device receives the tap operation on the operable part, the control button switches from "enabled" state to "disabled".

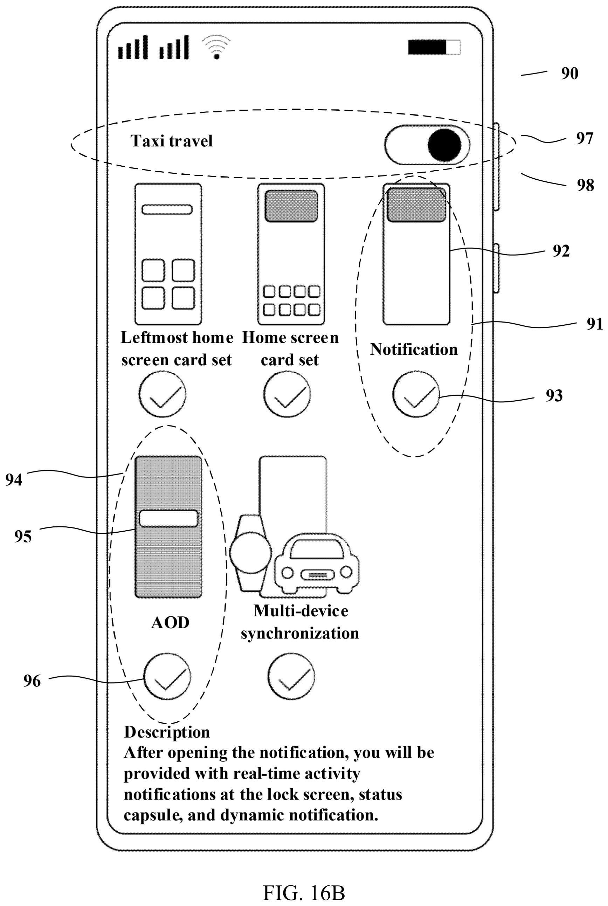

After receiving an operation (for example, taping) for a taxi travel setting item, the electronic device jumps to the notification display control interface 90 of taxi travel shown in FIG. 16B.

In an example, as shown in FIG. 16B, the interface 90 includes a setting item title 97 and switch control items of notification scenes. Taking the taxi travel service as an example, the setting item title includes the service name of the setting item "Taxi travel" and the control button 98. A function of the control button 98 is the same as that of the control button 84, and details are not described herein again.

The display scene control item may include control items such as a leftmost home screen card set, a home screen card set, a notification, an AOD, and multi-device synchronization. The display scene control item is used to control whether a current service is displayed in the notification of the scenario, where the current service is a service displayed at a header of a setting item of the current notification display control interface 90, and this example is the taxi travel service.

When the card set control item on the leftmost home screen is selected, the card of the current service is displayed on the leftmost home screen card set. The leftmost home screen is an interface that is called out by swiping right on the home screen homepage. The leftmost home screen interface can display the service card set, recommended content, a service and application search region, and the like.

After the home screen card set control item is selected, the card of the current service is displayed in the home screen card set, for example, the taxi travel card 31 shown in FIG. 6A to FIG. 6E.

After the notification control item is selected, the notification of the current service is displayed on the lock screen, the status capsule, and the dynamic notification. As shown in FIG. 5, the card 701 displayed on the lock screen, the status capsule 111 shown in FIG. 1B, and the card 130 shown in FIG. 1C.

After the AOD control item is selected, the notification message of the current service is displayed on the screen-off interface in an AOD manner, as shown in the AOD card 602 in FIG. 4.

After the multi-device synchronization control item is selected, the notification message of the current service is displayed in another device associated with the current electronic device.

In an example, as shown in FIG. 16B, the display scene control item includes a notification scene diagram and a control button. For example, the notification control item 91 includes a notification diagram 92 and a control button 93. The notification diagram 92 is used to indicate a notification style of a current service in a notification scene. After the control button 93 is selected, a notification message of the current service is displayed on a lock screen, a status capsule, or a dynamic notification.

Similar to the notification control item 91, the AOD control item 94 includes an AOD notification diagram 95 and a control button 96. After the control button 96 is selected, the electronic device is in a screen-off state, and after receiving the notification message of the current service, the notification of the current service is displayed in an AOD manner.

It can be learned that in this embodiment, the notification control item 91 may uniformly control presentation of information of a lock screen, a status capsule, and a dynamic notification. The presentation of the AOD notification is separately controlled by the AOD control item.

### VII. Notification display rules in various scenarios

In an embodiment of this application, to ensure that the user learns important notification information in time in each display scene, and avoid inadvertent notification disturbing the user in each display scene, a display scene of the notification may be decided according to an urgency degree and an importance degree of the notification. The notification display scene herein may include an AOD card (AOD card 602 shown in FIG. 14), a lock-screen card (card 701 shown in FIG. 15), a home screen card (card 31 shown in FIG. 16A and FIG. 16B), a global capsule (capsule 111 shown in FIG. 1B), a global card (card 130 shown in FIG. 1C), a notification center notification (card 201 shown in FIG. 1D), and a leftmost home screen card.

In an embodiment, the urgency degree is measured by whether it requires immediate interruption of attention to view, process, or use the service immediately. For example, in an example, the urgency of the service notification may include very urgent, urgent, in-progress, non-urgent, and the like.

For example, a very urgent notification needs to be processed by the user within a first preset time (for example, 5 minutes), for example, a notification of an enhanced warning on the user, for example, a notification of the taxi travel service for prompting the user to go to the pick-up point and wait for getting on.

The urgent notification needs to be processed within a second preset time (for example, 15 min to 30 min).

In-progress refers to a service that is in progress within 24 hours. For example, if a user purchases a flight ticket for 5 days later, the flight travel service reminds the user one day in advance of relevant reminders for the flight, such as check-in and boarding.

Non-urgent notifications usually need not be handled by the user.

In an embodiment, the criterion for measuring the importance level is whether ignoring it will cause a significant impact, such as loss of life, property, time, and opportunity. In an example, the importance of service notifications may include very important, important, general, and unimportant.

Very important means that if the user does not handle it, it may threaten the user's life, for example, notifications about major natural disasters such as earthquakes and typhoons.

Important means that if the user does not handle it, the property may be damaged, for example, a notification of picking up the package in time.

General means that a user may be wasted of time if he/she misses, for example, a notification in an express delivery.

Unimportant means that it has no impact on the user if the user misses it, for example, the system reminds the user about the time of healthy use of the mobile phone.

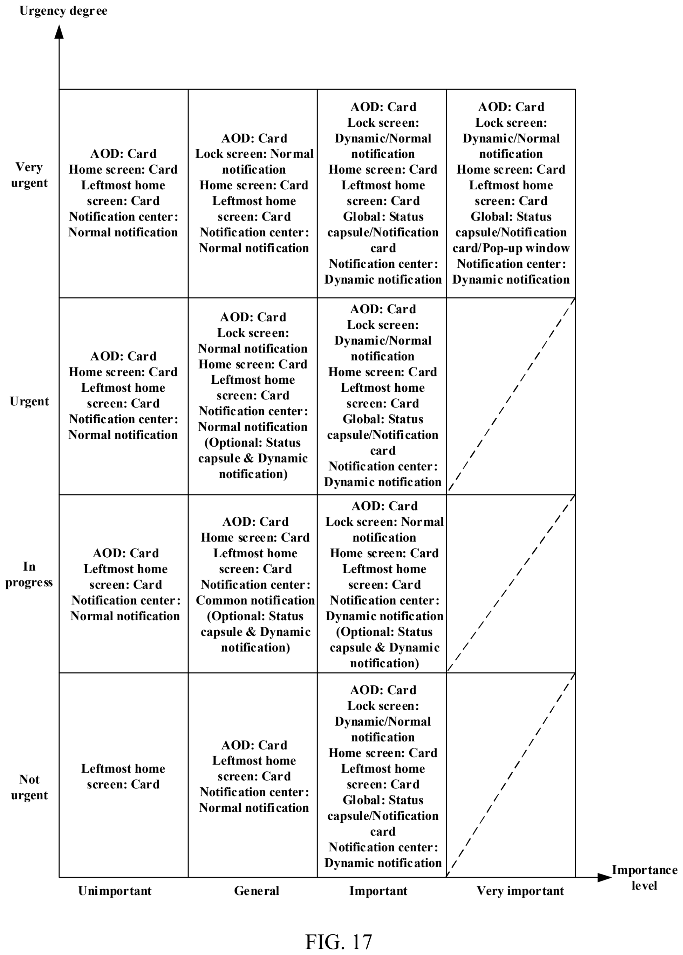

In an embodiment, as shown in FIG. 17, the horizontal axis represents the importance of the service notification, the vertical axis represents the urgency of the service notification, and the importance of the horizontal axis together with the urgency of the vertical axis determines specific display scenes for displaying service notifications.

For example, for a very important and very urgent service notification, it is required to display the notification in an AOD, a lock screen, a home screen, a leftmost home screen, a global capsule/card or pop-up window, a notification center, and the like, and the lock screen interface may be a dynamic or normal notification, and the notification center displays the notification in a form of a dynamic notification. In this way, the user may learn the notification in each usage scenario, to ensure that the user does not miss the notification.

For another example, for an unimportant and unurgent service notification, only a card of the service may be displayed on a leftmost home screen, thereby avoiding interference to the user caused by displaying the notification in multiple display scenes.

For notification of another case, refer to the display scene description corresponding to the corresponding coordinates in FIG. 17. Details are not described herein again.

In addition, a priority of the notification display rule of each scenario shown in FIG. 17 is higher than a control switch of each scenario notification shown in FIG. 16A and FIG. 16B. For example, in a scenario, the notification switch 93 in the control switch setting item of the taxi travel service shown in FIG. 16B is in an off state, and it is determined, according to the notification display rule shown in FIG. 17, that the taxi travel service notification is an important and urgent notification. Therefore, the notification of the service is still displayed in a display scene such as a lock screen, a status capsule, or a dynamic notification.

### VIII. Multi-capsule sorting rule

In a scenario in which it is determined, based on the notification display rule of each scenario shown in FIG. 17, that a service notification needs to be displayed in a form of a status capsule, and multiple status capsules exist, because the capsule has a global visibility and strong perception feature, a service attribute of the service needs to be considered comprehensively to determine an arrangement order of the multiple status capsules. In an embodiment, the service attributes may include manual end and automatic end.

Manual end means that a status of a task has no time limit. The end button of the task (APP) needs to be tapped to end the status of the task. For example, a service with a manual end attribute may include Call, Record, Exercise & Health, Alarm Clock, Timer, Express Delivery, and the like.

Auto end means that a status of a task has a time limit. After a natural time or a node, the status of the task is automatically terminated. For example, services with the manual end attribute may include Download, Taxi Hailing, Flight, Train, Subway, Movie, Game, and the like.

As shown in the following Table 1, capsule arrangement is determined according to a service attribute of a current status capsule displayed on top and a service attribute of a new status capsule.

**Table 1**

| Current status capsule on top | New status capsule | Capsule coverage principle |
|---|---|---|
| Auto end | Auto end | Latest status capsule on top |
| Auto end | Manual end | Manually set top |
| Manual end | Auto end | After the status capsule that is to be ended automatically is displayed for 10 seconds, the last status capsule that is to be ended manually is restored to the top |
| Manual end | Manual end | Latest status capsule on top |

The coverage principle shown in Table 1 is also applicable to an application scenario involving three or more capsules.

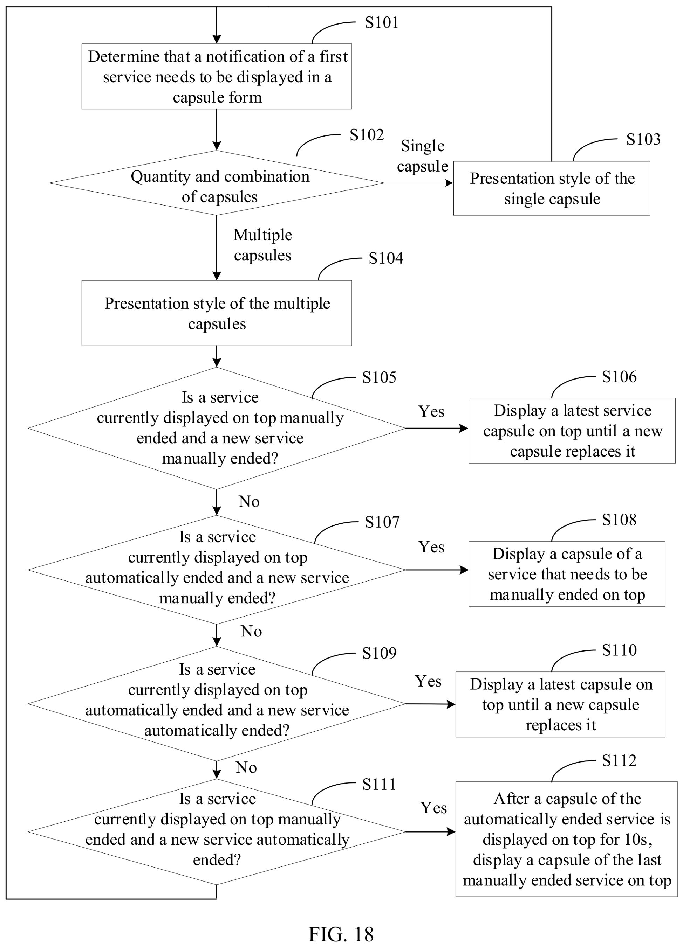

For example, in an example, as shown in FIG. 18, the capsule display procedure is as follows:
S101: Determine to display a service notification of a first service in a capsule form.

For example, in an embodiment, a display scene of the service notification is determined to include a capsule according to importance and urgency of the foregoing service notification, and a current display scene is a display interface of another APP. In this case, it is determined that a capsule needs to be used to display the service notification currently.

S102: Determine a quantity of capsules that need to be displayed. If a single capsule needs to be displayed, S103 is performed. If at least two capsules need to be displayed, S104 is performed.

This step is to determine whether the electronic device currently displays the capsule. If the electronic device currently does not display the capsule, that is, only the latest service needs to display the capsule. Therefore, if there is one capsule, S103 is performed.

If the electronic device currently has displayed the capsule, and the latest service needs to be displayed in a capsule form, it is determined that there are at least two capsules.

S103: Display the service notification of the first service by using a display style of a single capsule.

After S103 is executed, return to S101, that is, determine whether a next capsule needs to be displayed.

S104: Determine a display style of multiple capsules.

For example, the multi-capsule display style may be a display style of the multiple capsules shown in FIG. 6A, or a display style of the multiple capsules shown in FIG. 7A.

S105: Determine whether a service attribute of the current service is manual end, and an attribute of a new service is manual end. If yes, perform S106; or if no, perform S107.

Determine whether the service attribute of the service capsule currently displayed on top is manual end, and whether the service attribute of the new service is manual end. If both are yes, continue to perform S106.

S106: Display the latest service capsule on top until a new capsule replace it.

For example, in an example, if the capsule currently displayed on top is a call service and the new service is a recording service, the capsule of the recording service is displayed on top until another service capsule replaces the recording service capsule.

S107: Determine whether a service attribute of the current capsule is automatic end, and a service attribute of a new service capsule is manual end. If yes, perform S108; or if not, perform S109.

For example, in an example, the taxi travel service capsule is currently displayed on top, and the new service is a call service. In this case, it is determined that the service attribute of the current capsule is automatic end, and the service attribute of the new service is manual end.

S108: Display a service capsule that needs to be manually ended on top.

A priority of a to-be-manually-ended service is higher than a priority of a to-be-automatically-ended service. Therefore, in the example in which the service capsule currently displayed on top is the taxi travel service, and the new service is the call service, the call service capsule is displayed on top. If no new service needs to be displayed when the call service ends, the capsule of the taxi travel service will be displayed on top.

If a new manual-end service (such as a recording service) is enabled before the end of the call service, a capsule of the latest manual-end service is displayed on top, that is, a capsule of the recording service is displayed on top.

S109: Determine whether the current capsule is to be ended automatically, and the new service capsule is to be ended automatically. If yes, perform S110; or if no, perform S111.

For example, in an example, the capsule of the taxi travel service is currently displayed on top, and the latest service is a flight travel service.

S110: Display a latest service capsule on top until a new service capsule replaces it.

Priorities of auto-end services are the same. Therefore, the capsule of the latest service is displayed on top. For example, the current capsule is the capsule of the taxi travel service, and the latest service is the flight travel service. In this case, the capsule of the flight travel service is displayed on top. The capsule that is currently displayed on top is replaced when a new service appears. For example, after the capsule of the flight travel service is displayed on top, a new auto-end service appears, such as a download service. In this case, the capsule that is displayed on top is replaced with a capsule of the download service.

S111: Determine whether a current capsule is to be ended manually and a new service capsule is to be ended automatically. If yes, perform S112.

After S111 is executed, return to perform S101, to continue to determine whether a next capsule needs to be displayed.

S112: After the capsule of the auto-end service is displayed on top for preset duration, display the capsule of the last manual-end service on top again.

For example, in an example, when the capsule currently displayed on top is the call service, and the latest service is the taxi travel service, after the capsule of the taxi travel service is displayed on top for preset duration (for example, 10s), the capsule of the call service is displayed on top again.

In a scenario, there may be multiple manual-end services at the same time, for example, the call service and the recording service. The latest service is an auto-end service, for example, the taxi travel service. In this scenario, after the capsule of the taxi travel service is displayed on top for 10s, a status of the latest triggered service in the multiple manual-end services is displayed on top again. If a trigger time of the recording service is later than the call service, a status capsule of the recording service is displayed on top again.

According to a service capsule display rule provided in this embodiment, a status capsule to be displayed on top is determined according to service attributes of a service currently displayed on top and a latest service. In this embodiment, service attributes of services are classified into automatic end and manual end, and a priority of a manual-end service is higher than that of an auto-end service. Generally, a status capsule of a latest service is displayed on top. When a latest service is not a manual-end service, after a status capsule of the latest auto-end service is displayed on top for preset duration, a status capsule of the last manually displayed service is displayed on top again. In this way, the user can quickly learn a notification of an important service on another application interface.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A notification display method, applied to an electronic device, wherein the method comprises:
displaying a first interface, wherein the first interface comprises a status bar, the status bar comprises a first capsule notification, and the first capsule notification comprises status information of a first service;
receiving a second capsule notification, wherein the second capsule notification comprises status information of a second service; and
when both the first service and the second service are to be ended manually or automatically, displaying the second capsule notification on top;
when the first service is to be ended automatically and the second service is to be ended manually, displaying the second capsule notification on top; or
when the first service is to be ended manually and the second service is to be ended automatically, displaying the first capsule notification on top again after displaying the second capsule notification on top for preset duration.

2. The method according to claim 1, wherein the electronic device comprises a control switch corresponding to each display scene corresponding to the first service, and the method further comprises:
if an on-off state of a control switch corresponding to each display scene of the first service is inconsistent with a display scene corresponding to a notification of the first service that is determined based on a preset display scene rule, displaying the notification of the first service according to the display scene determined based on the preset display scene rule, wherein the display scene comprises at least one of a lock screen interface, a home screen card, a global status capsule, a global notification card, a notification center, and a leftmost home screen.

3. The method according to claim 1 or 2, wherein the electronic device further comprises an expand identifier below a capsule notification displayed on top, the first capsule notification is displayed on top, and the method further comprises:
in response to a first operation on the first capsule notification, displaying a first card and the second capsule notification that are arranged in sequence from top to bottom on the first interface, wherein the first card covers the first capsule notification, and the first card comprises the status information of the first service.

4. The method according to claim 3, wherein the method further comprises:
in response to a second operation on the second capsule notification, displaying the first capsule notification and a second card that are arranged in sequence from top to bottom on the first interface, wherein the first capsule notification is located in the status bar, the second card is located below the status bar, and the second card comprises the status information of the second service.

5. The method according to claim 3, wherein the method further comprises:
in response to a swipe-down operation on the first capsule notification, displaying a notification center, wherein the notification center comprises a third card and a fourth card that are arranged in sequence from top to bottom, the first card comprises the status information of the first service, and the fourth card comprises the status information of the second service.

6. The method according to claim 3, wherein the method further comprises:
displaying a fifth card on the first interface in response to a third operation on the first card, wherein the fifth card comprises the status information of the second service.

7. The method according to claim 1 or 2, wherein the first capsule notification is displayed on top, and the first capsule notification covers a part of a display region of the second notification capsule.

8. The method according to claim 7, wherein the first capsule notification covers a right part of the second capsule notification, and the method further comprises:
in response to a swipe-right operation on the first capsule notification, displaying the second capsule notification on top; and
in response to a swipe-left operation on the second capsule notification displayed on top, displaying the first capsule notification on an upper layer of the second capsule notification, wherein the first capsule notification covers the right part of the second capsule notification.

9. The method according to claim 7, wherein the method further comprises:
in response to a fourth operation on the first capsule notification, displaying the second capsule notification and a sixth card that are arranged in sequence from top to bottom on the first display interface, wherein the second capsule notification is located in the status bar, the sixth card is located below the status bar, and the sixth card comprises the status information of the first service.

10. The method according to any one of claims 1 to 9, wherein the electronic device comprises a front camera hole at the top of a screen; and
a capsule notification is located in the middle of the status bar, and the capsule notification comprises a first capsule region on a left side of the front camera hole and a second capsule region on a right side of the front camera hole.

11. The method according to claim 10, wherein the first capsule region comprises an icon of the first service, the second capsule region comprises an icon of the second service, and the method further comprises:
in response to a fifth operation on the first capsule region, displaying a seventh card on the first interface, wherein the seventh card comprises the status information of the first service;
in response to a sixth operation on the second capsule region, displaying an eighth card on the first interface, wherein the eighth card comprises the status information of the second service; and
in response to a swipe-down operation on the capsule notification, displaying a notification center interface, wherein the notification center interface comprises a ninth card and a tenth card that are arranged in sequence from top to bottom, the ninth card comprises the status information of the first service, and the tenth card comprises the status information of the second service.

12. The method according to claim 10, wherein the first capsule region comprises an icon of the first service, the second capsule region comprises an icon of the second service, the electronic device comprises capsule notifications corresponding to at least three services, and the method further comprises:
in response to a seventh operation on the first capsule region, displaying an eleventh card, a third capsule notification, and a fourth capsule notification that are arranged in sequence from top to bottom on the first interface, wherein the eleventh card comprises the status information of the first service, the third capsule notification comprises the status information of the second service, and the fourth capsule notification comprises status information of a third service;
in response to an eighth operation on the second capsule region, displaying a twelfth card, a fifth capsule notification, and the fourth capsule notification that are arranged in sequence from top to bottom on the first interface, wherein the twelfth card comprises the status information of the second service, and the fifth capsule notification comprises the status information of the first service; and
in response to a swipe-down operation on the capsule notification, displaying a notification center interface, wherein the notification center interface comprises a thirteenth card and a fourteenth card that are arranged in sequence from top to bottom, the thirteenth card comprises the status information of the first service, and the fourteenth card comprises the status information of the second service.

13. The method according to claim 12, wherein the method further comprises:
in response to a ninth operation on the third capsule notification, displaying a sixth capsule notification, a fourteenth card, and a seventh capsule notification that are arranged in sequence from top to bottom on the first interface, wherein the sixth capsule notification is in the status bar, the fourteenth card is located below the status bar, the sixth capsule notification comprises the status information of the first service, the fourteenth card comprises the status information of the second service, and the seventh capsule notification comprises the status information of the third service.

14. The method according to claim 10, wherein the first capsule region comprises an icon of the first service, and the second capsule region comprises an icon of a first switch of a fourth service.

15. The method according to claim 14, wherein the method further comprises:
in response to a tenth operation on the second capsule region, displaying a switch card on the first interface, wherein the switch card covers the first capsule notification, the switch card comprises the first switch and a second switch, the first switch is in a selected state, and a first function of the fourth service is enabled.

16. The method according to claim 15, wherein the method further comprises:
in response to an operation of enabling the second switch of the switch card, enabling, by the electronic device, a second function of the fourth service, and updating the second capsule region from the icon of the first switch to an icon of the second switch.

17. The method according to claim 14, wherein the method further comprises:
in response to a tenth operation on the second capsule region, displaying a switch card on the first interface, wherein the switch card covers the first capsule notification, the switch card comprises the first switch and a second switch, an adjustment button of the first switch is in a first position of an adjustment progress bar, and a first function of the fourth service achieves a first effect that matches the first position.

18. The method according to claim 17, wherein the method further comprises:
in response to a sliding operation on an adjustment button of the second switch, adjusting, by the electronic device, an effect corresponding to a second function of the fourth service, and updating the second capsule region from the icon of the first switch to an icon of the second switch.

19. The method according to any one of claims 14 to 18, wherein the method further comprises:
displaying a control center interface in response to a swipe-down operation on the second capsule region, wherein the control center interface comprises the first switch.

20. The method according to claim 13, wherein the method further comprises:
in response to an eleventh operation on the fourteenth card, displaying an application interface corresponding to the first service; and
in response to a twelfth operation on the fourteenth card, displaying a floating window on the first interface, wherein the floating window displays the application interface corresponding to the first service, and a display area of the floating window is less than a display area of the screen of the electronic device.

21. An electronic device, comprising one or more processors, a memory, and a touchscreen, wherein the memory is configured to store program code; and the processor is configured to run the program code, to enable the electronic device to implement the notification display method according to any one of claims 1 to 20.

22. A computer-readable storage medium, storing instructions, wherein when the instructions are run on an electronic device, the electronic device is enabled to perform the notification display method according to any one of claims 1 to 20.
